# EUROPEAN PATENT APPLICATION

(11) **EP 1 126 389 A1**
(43) Date of publication of application: **22.08.2001**
(21) Application number: 99942596.0
(22) Date of filing: 10.03.1999
(51) Int. Cl.: G06F 17/30, G06F 3/00, G09G 5/00, G09G 5/22

(54) **DATA DISPLAYING DEVICE AND METHOD, ELECTRONIC BOOK DISPLAYING DEVICE, AND RECORDING MEDIUM ON WHICH DISPLAY DATA IS RECORDED**

(30) Priority: 20.03.1998 JP 7156998; 26.03.1998 JP 7875798; 31.03.1998 JP 8540098
(71) Applicant: SHARP KABUSHIKI KAISHA, Osaka-shi, Osaka-fu 545-0013 (JP)
(72) Inventor: SAIGA, Hisashi, Nara 639-1131 (JP); SAWADA, Yuji, Osaka-shi, Osaka 536-0021 (JP); IWASAKI, Keisuke, Nara 636-0154 (JP); YAMANOUE, Masafumi, Nara 639-1002 (JP); KITAMURA, Yoshihiro, Osaka 545-0051 (JP); HIROSE, Hitoshi, Osaka 579-8003 (JP); KUGA, Shigeki, Nara 631-0046 (JP)
(74) Representative: Müller, Frithjof E., Dipl.-Ing.
(86) International application number: JP9901137
(87) International publication number: WO9949402

(57) **Abstract**

Conventional data displays and electronic book devices involve the problem that the operation to highlight displayed data is complex, and therefore the displayed data cannot be read easily depending on the environment where the reader (user) uses the device and on the understanding of the displayed data by the user. A data displaying device of the invention comprising storage means (1) stored with data, displaying means (2) for displaying data, and display control means (3) for controlling the display of data stored in the storage means (1) on the displaying means (2) is characterized by further comprising a highlight displaying means (4) for displaying a visual confirmation guide for highlighting a specific range of the data displayed on the displaying means (2).

## Description

### TECHNICAL FIELD TO WHICH THE INVENTION PERTAINS

The present invention relates to a data displaying device or an electronic book displaying device and more specifically to a data displaying device or an electronic book displaying device for displaying document data consisting of characters or images stored on a storage medium and a storage medium with a record of the data to be displayed.

### BACKGROUND OF THE INVENTION

Japanese Laid-Open Patent Publication No.07-182325 discloses a document data displaying device that comprises a document storage means for storing document data (corresponding to display data used for the present invention), a sound data designating means for designating a record of sound data responding to the document data recorded on the storage means and a document data displaying means for recognizing the document data responding to an input sound data designated by the sound data designating means and displaying the recognized document data. For example, this prior art first specifies the recording of sound data in accord with a specified document data to record the sound data on a sound data storage medium in the specified relation with the document data. The above recording method permits simultaneous reproduction of sound and document data in the given relationship. Namely, when any portion of document data being displayed on a screen is designated by placing a cursor key thereon, the data portion is distinguished visually by reverse way and, at the same time, corresponding sound data is recognized and output through a sound output means. When a sound signal is first reproduced, a document data portion corresponding to the sound signal is distinguished visually (by reverse way) on the display screen, allowing a user to easily recognize the text corresponding to the sound signal being reproduced.

It is well known that a word processor can emphasize a specific character string or a specific character area in various manners. For example, a character, word, line, sentence, paragraph or an image is specified and emphasized by underlining, reversing and marking or by changing the size or point number or color of the current font to another or by using a 3D image or by gradating or by changing the style to emphasized characters like bold and italic or ornamental characters like emboss. This method consists of two steps of first specifying with a mouse an area to be emphasized and of second deforming characters or an image therein.

Electronic books and electronic book displaying devices (electronic book players) are also widely known. A typical one is a portable book device comprising a storage means for storing a document (e.g., a dictionary, novel etc.), a displaying means for displaying the content of the storage means on a display screen and a display control means for controlling the display means.

However, the prior art disclosed in Japanese Laid-Open Patent Publication No.07-182325, which concerns an emphatically displaying method by representing in opposite tone to the background, is intended to distinguish document data corresponding to sound output data visually and does not possess an emphatic function to facilitate reading of document data by remark display.

The above art varies remark positions on document data according to a sound output signal rate and cannot move the remark position on the document data in accord with its content.

The same art limits the emphatic method to representing in opposite tone to the background and does not allow a user to selectively use any of emphatic methods in accord with surrounding conditions or by preference.

The same art moves an emphatically displayed document data by a unit character corresponding to a sound output but cannot distinguish a line, sentence, paragraph and section of the document visually, which is over in length of a unit character.

The same art cannot control timings of presenting remark display.

The same art cannot dynamically vary a remark area of document data in accord with the document data or by user's preference.

The same art cannot adjust the moving speed of emphasized document data in accord with a user's reading speed.

The same art cannot move the emphasized portion in the reverse direction.

The same art involves a problem that an emphasis cannot be deleted.

The same art has merely statically emphasized portion and cannot move the emphasis at a speed suitable for a user.

The character and image remark method used for word processors comprises two steps of specifying an area and deforming (distinguishing visually) of the specified area of characters or an image and requires setting for two steps every time of emphasis. This complicates the use of the remark function.

A problem with the portable type electronic book devices is that one often fails in following the correct lines of a text with many and small characters or a complicated text being displayed on a screen. For example, users may read the document with erroneously skipping a line or reading again the same line.

The prior art and known methods cannot allow the user to easily read an electronic book on the electronic book player in an electric train because of fluctuation of a screen.

The prior art and known methods cannot vary a moving speed and deformation degree of a remark position in accord with understanding of the document by the user.

Accordingly, a primary object of the present invention is to provide a data display or an electronic book device, which is simple to distinguish document data visually and allows a reader (user of the device) to easily follow with his or her eyes characters in lines depending on the environment where the user uses the device and the understanding of the displayed document data.

Another example of an electronic book device is disclosed in Japanese Laid-Open Patent Publication No.63-15796, which comprises an external storage medium with recoded thereon data (characters, numerals, symbols) in the form of coded signals, a document data recorded data reproducing device, a flat displaying device, an external inputting keyboard, a character memory and a thin portable type book device including a micro computer (an electronic book displaying device for the present invention). In this device, data recorded on the external storage medium is reproduced by the reproducing device and a page (i.e., screenful) consisting of characters, digits and symbols is displayed on a flat screen by the micro computer, which is read by a user (reader). The above publication also describes a portable book device that reproduces a plurality of screenfuls of data and temporarily stores the screenfuls on the temporary memory. The user can display on a display screen any page specified through the external keyboard. Thus, the user can read the desired page displayed on a screen. The above art allows the user to bring the next page on the screen by pressing a button "next page" just like he or she turns a page of a paper book.

Japanese Laid-Open Patent Publication No. 8-249344 discloses an art relating to an electronic book device that comprises a storage medium with recoded thereon book data, a displaying means for reading the book data from the storage medium and displaying the data on a screen and a page transmitting means for tactually informing the user of the page position by vibration. Namely, the page transmitting means is a generator for generating vibration with frequencies corresponding to respective page positions. That is, the art concerns the electronic book device that generates vibration whose frequency increases or decreases as the page number increases or decreases or has a specified value at a specified page. This enables the user to recognize a relative position of a current page among the whole pages of the book by his or her tactual sense. The art allows a user to tactually retrieve any desirable page by try and error method.

Japanese Laid-Open Patent Publication No.5-224582 discloses an art relating to a drama reproducing device that comprises a display for displaying soundless images in succession, an image sound storage for storing input images and accompanying sounds, a sound selecting device for selecting respective sound signals adapted to the respective images and a sound attaching device for attaching the selected sounds to corresponding images.

The device can reproduce the drama with accompanying sounds. The same art describes that a drama is selected according to user's age, mental age or the purpose of the drama. For the user being a little child, a drama containing a simple usual conversation, living environmental sound and animals' voices, etc. may be selected. For school children, a drama containing human document or developing through discussions may be selected. The art can give pleasure to users by presenting a drama containing selected images and sounds.

Furthermore, there is a widely known technique concerning home pages of Internet World Wide Web (WWW), which realizes outputting a changed message or a changed background by a user for a time of accessing a desired home page or automatically switching over to another home page at a certain time elapsed after the access.

The above described conventional electronic book displaying device can output to a displaying device or sound output device only book data, image data and narrative sound data and cannot increase the pleasure of reading the book with the additional desirable effect that may be created by multimedia information including vibration.

The above conventional electronic book displaying device has no function for sensing a mental state of a user and cannot output images and sounds, which can more increase the pleasure of reading with consideration of the user's mental state.

The same conventional device is adapted for an editor to create a drama with sound by selecting images from plural images from a point of the editor' s view and adding sound data thereto. It has no function to correspond plural images to a specified scene and produce sound data adequate to respective images. Consequently, a considerable large load is put on selection of images from the editor's point of view and addition of sound signals to the selected images.

The same device has no function to know information such as reader's history and cannot therefore change a content of book data to be output according to the number of reading times. In summary, it cannot facilitate the reader to do fresh reading.

The same device has no function to adjust a reading speed according to information about a reader and the content of the book and cannot therefore allow the reader to read a book rapidly or slowly.

The same device is intended to improve the understanding of data (drama) of a book and cannot provide a function to present subliminal visual and sound information for a very short time in mixture with document data in order to increase the general effect of reading, develop the potentiality of the reader and provide psychotherapeutic and educational effects.

The same device can reproduce the same vibration or sound every time when related data of a book is reproduced. Repeating the same information cannot promote the reader's interest and understanding.

The same device has fixed output levels of vibration and sound information. It cannot gradually vary the output level of, e.g., fade in or fade out sound information to increase the reading effect.

The same device has no function to determine a relation between a position and a time of outputting book data related vibration or sound information on a display means and cannot therefore vary the output in accord with the action or interlocking motion of the reader to increase the reading effect.

The same device has no function to control the output in the presence of plurality of vibration or sound data related to book data in the same page or the same window. Therefore, it cannot produce a harmonized sound from plural sound data to enhance the reading effect.

Accordingly, another object of the present invention is to provide an electronic book displaying device that has a means for capturing and managing information such as a reader's mental state and reading state and, when book data concerning reading effect data is displayed on a display means, can easily output multimedia reading effect data adapted to the reader's reading information to increase a general effect of reading and improve psychological and educational effects.

On the other hands, in case of displaying oversized image data or an enlarged portion of the image data on a display screen or changing over the screen image to another hidden (not yet displayed) area, a user usually scroll the screen image in the desired direction by pressing a "direction" key or by using a mouse. This is a very troublesome operation in particular with data of "news paper" whose multi columns is difficult to find the continuation of the sentence at the end of one column and contains a considerable data amount to be scrolled. In this connection, Japanese Laid-Open Patent publication No.4-43387 discloses a displaying device capable of automatically scrolling each image (data) having a larger size than that of the screen along a route preset and stored in the form of a series of coordinates in the coordinate system on its display screen, thus eliminating the need of manual scrolling operation. According to the art disclosed in Japanese Laid-Open Patent publication No.4-43387, the scroll is realized by tracing points of the route in a given direction to subsequently bring onto the screen hidden unit areas each being a unit rectangle of a fixed size with a center at a current point of the preset route.

It is usually desired to control the display of data in a display range and at resolution in accord with its content and font size. On the contrary, the art of Japanese Laid-Open Patent publication No.4-43387 displays areas each of a fixed size in the same scale on the display screen and, in some cases, may not indicate necessary information on the screen and may not clearly display thin characters and details of an image.

For a novel or comic book to be read and displayed page by page on a display screen, it is desirable that the page images are subsequently scrolled since sentences and images on each page (screenful) relates to those of the next page or a hidden part of the same page. The art cannot automatically scroll the image to subsequent image to feel the continuation of the content.

Accordingly, a further object of the invention is to provide an electronic book displaying device that can eliminate the possibility of not indicating necessary information apart from a scroll route and/or the difficulty of recognizing thin characters by adding information of each specified unit of scroll and setting a displaying frame size, scale factor, scroll speed for each interval of scroll route and can also realize effective display of images by scrolling at varying the size, scale factor and scroll speed with begging the reproduction of sound data and animation data in synchronism with the scroll operation.

### SUMMARY OF THE INVENTION

A data displaying device according to the present invention comprises a storage means with data stored thereon, a displaying means for displaying the data and a display control means for controlling the outputting of the data stored on the storage means onto the displaying means and featured by further providing a remark display control means for displaying a visual confirmation guide for distinguishing a specified range of display data on the displaying means visually. The remark display control means can display the visual confirmation guide over the data being displayed on the displaying means. The same control means can produce a visual difference of the display data from the visual confirmation guide overlaid thereon by deforming the display data or adding information thereto and can display the distinguished display data over the visual confirmation guide.

The same control means can move the visual confirmation guide being displayed on the display screen. The same control means can display the visual confirmation guide in a deformed (modified) form on the display screen. The same control means can display a deformed visual confirmation guide by moving it on the display screen.

The remark display control means can recognize a preset moving speed before moving a visual confirmation guide and can display the guide by moving it at the preset moving speed on the display screen. The same control means can recognize a preset moving distance before displaying the visual confirmation guide and can display the visual confirmation guide by deforming it according to the recognized moving distance. The same control means starts moving or deforming of a visual confirmation guide being displayed on the screen if the visual confirmation guide is not moved in a specified direction or not deformed. On the contrary, the same control device stops moving or deforming of the visual confirmation guide if the guide is moving in a specified direction or it is being deformed.

The same control means can delete the visual confirmation guide being indicated on the display screen. It can also move or deform the visual confirmation guide at a specified speed based on the complexity of data contained in the guide. The same control device can move or deform the visual confirmation guide at a specified speed based on the frequency of occurrence of data in the guide. It can further move or deform the visual confirmation guide at a speed adjusted based on both the complexity and the occurrence frequency of data displayed in the guide.

A data displaying method according to the present invention comprises a data storing step a data displaying step and a data display control step for outputting data from a memory means onto a display means and is characterized by further including a remark display control step for displaying a visual confirmation guide for distinguishing a specified area of display data in the data displaying step visually.

A data display program according to the present invention includes a function of displaying a visual confirmation guide using a differential visibility of an object, a function of remark display data by the visual confirmation guide being displayed and a function of moving or deforming the visual confirmation guide at a speed predetermined based on the complexity and/or frequency of occurrence of the display data. The program is performed by a computer to facilitate a user to easily read display data with emphasis on a display screen.

An electronic book displaying device according to the present invention comprises a storage means with a record of book data, a display means for displaying the book data stored in the storage data, a page turning means for turning a current page (screenful) of the book data to next one on a display screen and is featured by further including an environment control means for controlling the information about user's reading conditions, a second storage means for storing image data being a different viewpoint representation of the book data being displayed on the display screen or storing mental image data distinguishing the different viewpoint scene data visually, a mental image outputting means for outputting mental image data and a reading effect control means for controlling reading effect data produced by using the different viewpoint scene data and the mental image data.

The above reading effect control means can control the reading effect data referring to the user's reading conditions stored in the environment control means before outputting the data to the display means or the mental image outputting means. The reading effect control means can output the reading effect data after displaying on the display means a whole or partial book data area correlated with the mental image data.

The reading effect control means can also output the reading effect data after a certain period specified by a time switching mode for changing the presentation time of the book data.

The reading effect control means can control a time or a method of outputting the reading effect data according to display mode values preset for each of areas into which the book data are divided based on the content or format of the book data. The reading effect control means can produce and output the reading effect data by using a reading effect table or related graph for determining the correspondence of the reading effect data to reading environmental information consisting of user's information and user's mental state or reading information. The reading effect control means can also change a mental image data output level in a range from 0 to a maximal value in proportion to a mentality level determined by synthesizing the user's mental state information. The reading effect control means can further output the mental image data proportional to an amount of motion of turning pages by the user.

Furthermore, in case of coexistence of plural book data areas corresponding to the mental image data on the same page (screenful), the reading effect control means can output the reading effect data corresponding to each mental image data for each area. The reading effect control means can also stop outputting a whole or a part of the reading effect data. It is also possible for the user to change the control method of the reading effect control means.

A storage medium containing a program readable by a computer, which is provided by the present invention, is performed by a computer to realize a book data storage function, a stored book data displaying function, a page turning function for turning pages of the book data being displayed, an environment information control function for managing information of the reader's conditions, a second storage function of recording different viewpoint scene data or mental image data, a mental image data outputting function and a function of synthesizing the different viewpoint scene data with the mental image data to produce and output reading effect data for increasing the effect of reading the book data being displayed on a display screen.

The above described system structure according to the present invention can output the reading effect data in accord with the reader's reading conditions, thus providing the user with the reading effect that cannot be received from usual reading. This may contribute to easy understanding, increasing mental effect and improving educational effect.

The storage medium containing display data according to the present invention is a storage whereon data to be displayed was recoded in specified separated units and has information scrollable for each specified unit on a display screen.

This allows the reader to set a content adapted scroll display on the display screen, achieving the effective display according to the content of setting information for the scroll display. When reading a display data in a complex format (e.g., newspaper report in columns) on a display screen of an electronic terminal, the reader can read display data by subsequent scrolling by a given unit without doing troublesome scrolling operation.

The storage medium containing display data according to the present invention is featured in that the specified unit is a page (screenful).

This enables page by page management of information for scroll display on the display screen to subsequently display data by scroll within a page with no need for doing complex scroll operation.

The storage medium containing display data according to the present invention is featured in that the scroll display information includes information for scrolling in different directions.

This makes it possible to successively display a page with no need for doing troublesome scroll operation even if the scroll display is made changing the scrolling direction.

The storage medium containing display data according to the present invention is featured in that the scroll display information includes information about linkage with different scroll display information.

This makes it possible to scroll the image data from the current unit to another unit of display data with no need for user's instruction, thus reducing the user's labor.

The storage medium containing display data according to the present invention is featured in that the scroll display information includes information about the speeds of scrolling the display image.

This makes it possible to selectively change a scroll speed depending upon the number of characters in each line or reduce the scroll speed while reading an important data section of the image and produce a special display effect by changing the scroll display speed.

The storage medium containing display data according to the present invention is featured in that the scroll display information includes information for designating a desired display area to be scrolled.

This makes it possible to specify a necessary display area to be displayed in neighborhood of the scrolling path, thereby solving the problem of displaying necessary information outside the scrolling path.

The storage medium containing display data according to the present invention is featured in that the scroll display information includes information necessary for specifying a magnification or reduction ratio of a display area to be scrolled.

This makes it possible to change a visible size of data in the neighborhood of the scroll path in such a way that for example an area of small size characters is enlarged to a desired degree or a specific effect is given to an image by scrolling it with gradually enlarging the image data.

The storage medium containing display data according to the present invention is featured in that the scroll display information includes sync reproduction information necessary for specifying an image data content to be reproduced in synchronism with the scroll display.

This makes it possible to create an effective scroll display image with synchronously reproduction of a sound signal or the like.

A displaying device according to the present invention is a player that can reproduce display data of the storage medium according to the present invention and display by scroll the reproduced image on its display screen according to the scroll display information.

This device can therefore achieve an effective scroll display of the image data by flexibly processing the data based on parameter information added to the scrolling path when scrolling the display image according to the information for scroll display.

The displaying device according to the present invention is featured by the provision of a scroll instruction means for specifying scroll conditions.

This device can automatically reproduce and display the scrollable display information once the scroll display was instructed by the user. This releases the user from the labor of repeating the scroll instruction operation. On the other hand, the device allows the user to selectively scroll the display image at user' s own pace by using the scroll instruction means when the user selected a mode of reproducing and displaying the scrollable image only for a duration of pressing a scroll instruction button. The user may avoid misreading of displayed data due to a faster scrolling speed.

### BRIEF DESCRIPTION OF THE DRAWINGS

Figure 1 is a functional block diagram of a first embodiment of the present invention.
Figure 2 is an exemplary data structure for displaying a visual confirmation guide.
Figure 3 is a view for explaining a method of remark display data by representing in inverse color.
Figure 4 shows exemplary remark display methods other than the examples shown in Figs. 3(B) and 3(C).
Figure 5 is a flow chart depicting the processing steps for exemplary remark display methods shown in Figs. 3(B) and 3(C) or Figs. 4(A) - 4(J).
Figure 6 is an exploded view of Fig. 4(D) .
Figure 7 depicts an exemplary data structure for realizing a second embodiment of the present invention.
Figure 8 shows an example of moving a visual confirmation guide along an image being displayed on a screen.
Figure 9 is a general flowchart depicting the processing steps of the second embodiment of the present invention.
Figure 10 shows an exemplary data structure for realizing a third embodiment of the present invention.
Figure 11 is a flowchart depicting the processing steps of an exemplary method for remark display data by using a specified remark display time.
Figure 12 shows an exemplary data structure of a table defining a time length of remark display, which table is used for another example of remark display by using the frequency of display data occurrence.
Figure 13 is an external view of an exemplary data displaying device according to the present invention.
Figure 14 shows an exemplary menu screen for setting parameters of remark display.
Figure 15 is a block diagram of an electronic book displaying device according to an aspect of the present invention.
Figure 16 illustrates an external view of a typical electronic book displaying device according to an aspect of the present invention.
Figure 17 is a schematic view showing a format of an electronic book data recorded on a storage means.
Figure 18 illustrates an exemplary data format of one page of book data.
Figure 19 illustrates an exemplary data format of mental image data to be output in accord with a book data content, which is included in the book data stored on the storage medium.
Figure 20 shows an exemplary data structure of reader's environmental information to be managed by a environment control means.
Figure 21 is a flowchart depicting an exemplary data processing by a reading effect control means according to the present invention.
Figure 22 shows an exemplary image of a specified page displayed on a display means.
Figure 23 is a view for explaining an exemplary time switching mode for defining timing of outputting a reading effect data at Step S56 of the flowchart shown in Fig. 21.
Figure 24 shows an exemplary structure of a data to be displayed in a display mode.
Figure 25 shows an exemplary reading effect table used for establishing a correlation between reader's environmental information and reading effect data to be output.
Figure 26 is a view for explaining an electronic book displaying device according to another aspect of the present invention.
Figure 27 is a view for explaining an electronic book displaying device according to another aspect of the present invention.
Figure 28 is a view for explaining an electronic book displaying device according to another aspect of the present invention, which uses shown timing charts of outputting reading effect data for respective reading effect marks existing at two places on a display screen.
Figure 29 is a view for explaining an exemplary menu image for inputting settings.
Figure 30 is a view for explaining an electronic book displaying device according to another aspect of the present invention, which is used as a display unit for learning audiovisual material or enjoying a quiz game.
Figure 31 is a view for explaining an electronic book displaying device according to another aspect of the present invention, which is used as a display unit for automatically displaying scenes in a comic or a presentation display unit.
Figure 32 shows a whole structure of a storage medium containing book data to be displayed by an embodiment of the present invention.
Figure 33 shows a whole structure of a storage medium containing book data to be displayed by another embodiment of the present invention.
Figure 34 shows an exemplary structure of an area for managing information of book data.
Figure 35 shows an exemplary structure of an area for page data of book data.
Figure 36 shows an example of image data among objects stored in a page data area.
Figure 37 is a mimic illustration of a scrolling path preset in a page data area.
Figure 38 shows exemplary data in a scroll path information area.
Figure 39 shows partial divisional information stored in a scroll path information area.
Figure 40 is a view for explaining a relation between values stored in partial divisional information of Fig. 39 and a method for scrolling image data.
Figure 41 is a block diagram of a display unit according to an aspect of the present invention.
Figure 42 shows an external view of a portable display unit according to the present invention.
Figure 43 is a flowchart depicting a data processing procedure for carrying out of a usual display mode of an display unit according to the present invention.
Figure 44 is a flowchart depicting the data processing procedure for carrying out of a scroll display mode of a display unit according to the present invention.
Figure 45 is a mimic illustration of a page composed of plural different objects arranged thereon.
Figure 46 illustrates a display frame to be stored in a partial divisional information area.

### DETAILED DESCRIPTION OF THE PREFERRED EMBODIMENT

### (Embodiment 1)

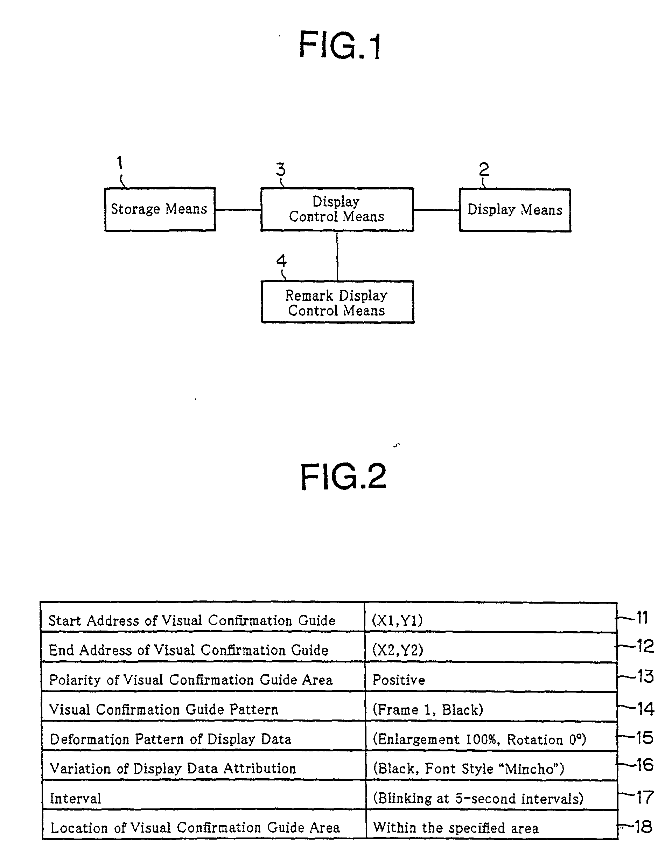

Figure 1 is a functional block diagram of a first embodiment of the present invention. In Fig. 1, a storage means 1 that can be composed of a magnetic storage medium such as a CD-ROM or a semiconductor memory such as a IC card. Display data stored in the storage means 1 is read therefrom by a display control device 3 to display on a display means 2 such as a LCD, CRT and plasma display.

The display control means 3 converts each character string of the display data into corresponding character font patterns or performs expansion or resolution conversion of the display image data as necessary and then displays the data on the display means 2. The term "display control means 3" is used to represent a total control means for controlling an entire process of displaying image data on the display means. For example, the same control means may be a central processing unit (CPU) in a particular case. A remark display control means 4 is used to emphasize display data being displayed on the display means 2 by overlaying a visual confirmation guide thereon. The display means of the present invention may be of two or three dimensional type. The embodiment with two dimensional type display means 2 will be described below for the sake of simplicity of explanation.

Figure 2 shows an exemplary structure of data for presenting a visual confirmation guide. In Fig. 2, numeral 11 designates a data item (entry) indicating start address information for starting the visual confirmation guide. An address for the two dimensional image can be represented by a set of coordinate values (X1, Y1). Numeral 12 designates a data item indicating end address information (X2, Y2) for ending the visual confirmation guide. The visual confirmation guide has an area restricted by points (X1, Y1) and (X2, Y2). Item 13 defines the polarity of the visual confirmation guide area. The visual confirmation guide area with positive polarity is an area specified by (X1, Y1) and (X2, Y2). The visual confirmation guide area with negative polarity is an area determined by subtracting the area specified by (X1, Y1) and (X2, Y2) from a whole image area. A data item 14 stores pattern information of the visual confirmation guide, which is used for selecting for example a guide area pattern such as a uniform color of a whole area, a rectangle frame, additional triangle and so on.

A data item 15 stores information relating to the type of deformation process to be made on display data within the visual confirmation guide area. The information may include for example a magnification factor, a rotation angle and the like. A data item 16 stores information for changing the attributes of display data within the visual confirmation guide area. The information may include for example a font color, font type, image gradation and the like.

A data item 17 stores information for defining an interval of displaying the visual confirmation guide, which includes information such as, for example, "flashing at an interval of 5 seconds", "Progressively changing" and "No change". A data item 18 stores information for managing the location of the visual confirmation guide. This information includes such information as "within", "before", "after" and "within plus after" a specified area. "Within" means an area surrounded by a boundary defined by (X1, Y1) and (X2, Y2). "Before" means a front area in front of the area specified by (X1, Y1) and (X2, Y2). Namely, the front are is an area defined by a left top starting point on the display screen and an end point just before the area specified by (X1, Y1) and (X2, Y2). Items (entries) 11 to 17 can be managed as a data array or a table.

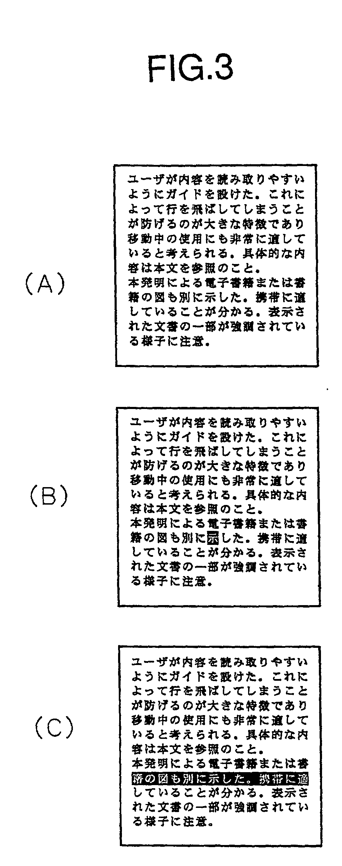

Fig. 3 is a view for explaining a method of distinguishing a display data visually by representing in inverse color, wherein display data is displayed on the display means by the display control means or the remark display control means. Fig. 3(A) shows display data being displayed with no emphasis. Fig. 3(B) shows display data being displayed with a Japanese Kanji character " 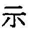 " distinguished by representing in inverse color. Fig. 3(C) shows display data being displayed with a remark line beginning from Japanese Kanji character " 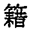 " by representing in inverse color. The area distinguished by representing in inverse color corresponds to a visual confirmation guide. The visual confirmation guide (i.e., an area to be emphasized) can be set to cover any of a whole page (screen image), character(s), word(s), sentence(s) and paragraph(s).

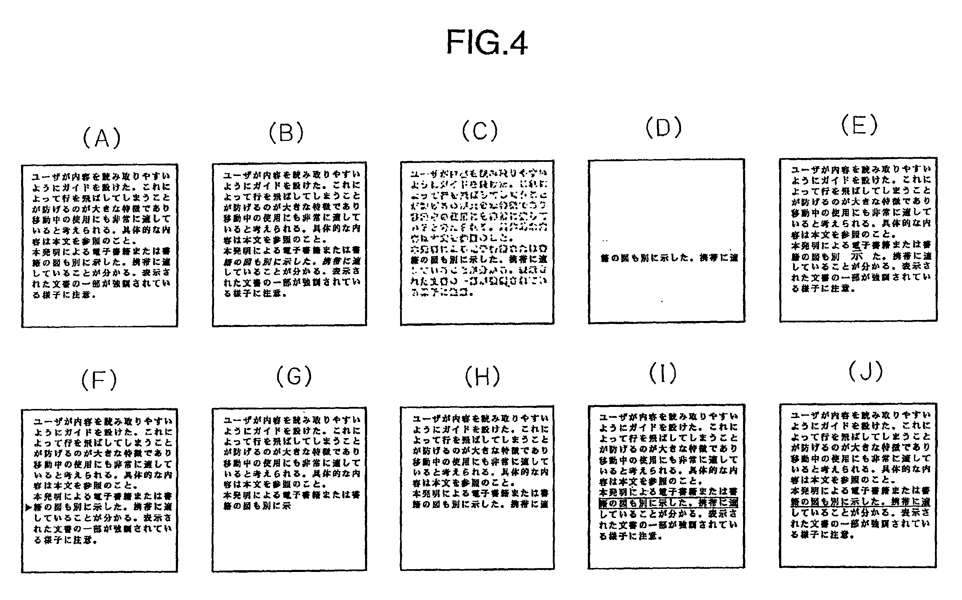

Fig. 4 shows exemplary remark display images other than the examples of Figs. 3(B) and 3(C). Fig. 4(A) shows an example of remark display on the basis of one character units by changing their font styles, wherein Japanese kanji character " 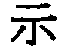 " is displayed in a font style different from other characters. Fig. 4(B) shows an example of remark display data by using a changed font style, wherein a line beginning from a character " 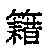 " is displayed in a font style different from the other lines. Fig. 4(C) shows an example of distinguishing an area other visually than an area covered by a visual confirmation guide in such a manner that a visual confirmation guide is temporarily put on a line beginning from a character 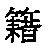 to be emphasized and then changed to cover an area other than the above specified line by changing the polarity of the guide area to negative, wherein the area newly covered by the visual confirmation guide is further weaken in its visibility by a specified pattern or processing to distinguish the specified line in contrast with the weakened area within the visual confirmation guide. Fig. 4(D) shows an exemplary emphasis of the same line of Fig. 4(C) by causing the display data covered by the visual confirmation guide not to be displayed on the display screen.

Fig. 4(E) shows an example of distinguishing a unit character visually in an enlarged scale (e.g., a Japanese character " 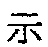 " in the shown case) in the display image. Fig. 4(F) shows an example of distinguishing a line visually by putting a mark just before the beginning of the line. Fig. 4(G) shows an exemplary remark display obtained by putting a visual confirmation guide on a character " 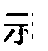 ", setting its location to "after" the specified area and setting the visual confirmation guide pattern to "white". Fig. 4(H) shows an exemplary remark display obtained by applying the same method of Fig. 4(G) to a line beginning from a character " 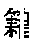 ". Fig. 4(I) shows an exemplary remark display of a line by enclosing the line by a rectangle. Fig. 4(I) shows an exemplary remark display of a line by drawing an underline along there.

As described above, a variety of emphasis of respective display units can be realized by changing the visual confirmation guide parameter values in the table shown in Fig. 2, displaying the visual confirmation guide over a specific unit of data being displayed on the display screen and deforming the display data within the visual confirmation guide area or adding information for causing a difference in visibility of the specified area of display data from the remaining area. The examples shown in Figs. 3 and 4 are merely descriptive and have no intention to restrict a scope of the remark display according to the present invention.

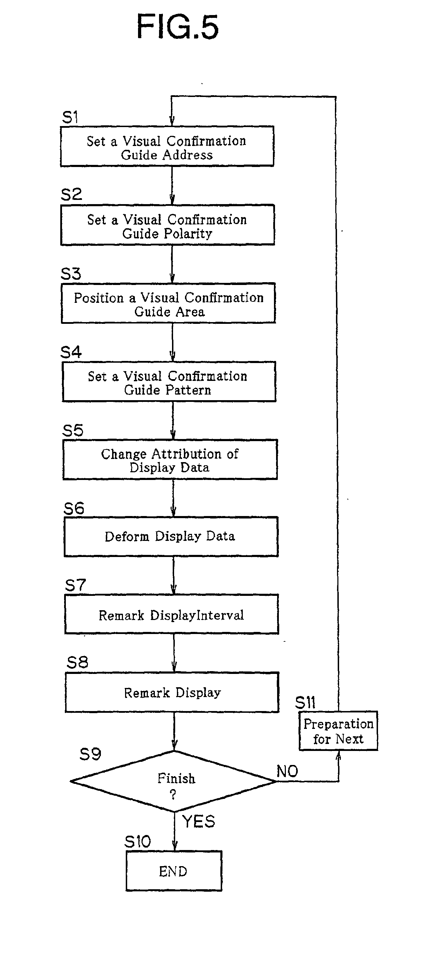

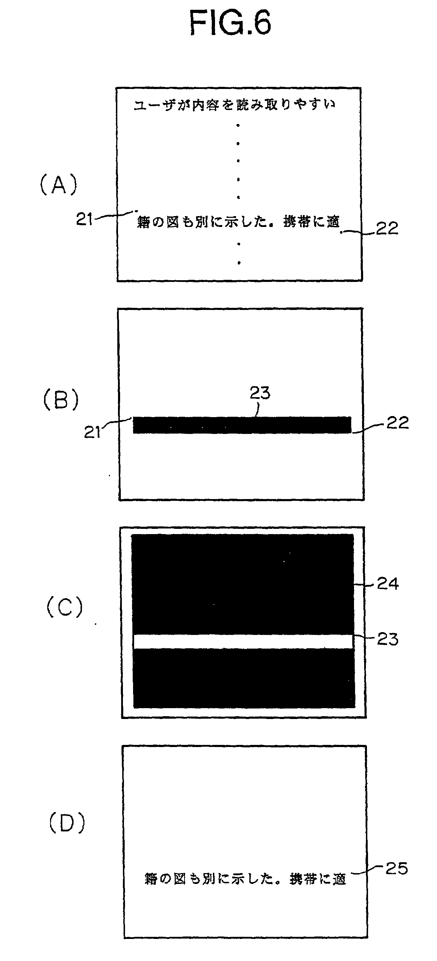

Fig. 5 is a flowchart depicting a procedure of realizing examples of remark display of Figs. 3(B) to 3(C) or Figs. 4(A) to 4(J). Referring to the data structure of Fig. 2 and Figs. 6(A) to 6(D) (development of Fig. 4(D)), the remark display procedure of Fig. 5 will be described below.

Step S1 is a processing module for setting an area to be displayed with emphasis, which area is designated by a user or the remark display control means. For example, the user designates a point (X1, Y1) 21 and a point (X2, Y2) 22 (Fig, 6) by using a pointing device. These values are accumulated in the visual confirmation guide start address and the visual confirmation guide end address (Fig. 2), which are retrieved by the remark displaying device. The values (X1, Y1) and (X2, Y2) are transferred by the remark display control device to the display control means that in turn determines a rectangular area 23 surrounding by (X1, Y1) and (X2, Y2) (Fig. 6(B)) from page buffer addresses (X1, Y1) (X2, Y2). Although the points (X1, Y1) (X2, Y2) were designated by the user with a pointing point in the above instance, they are usually designated by the remark display control means (by the user's request or default setting of the remark display control means). In this case, a unit area to be displayed with emphasis is any of: a whole screen image, a character, n characters, a word, a line, a sentence and a paragraph. Although the area to be emphasized was designated in the shape of a rectangle, it may have an elliptical shape or a circular shape.

The remark display control means refers to the visual confirmation guide polarity information 13. In this instance, the visual confirmation guide is assumed to be of negative polarity. The remark display control means obtains the negative polarity information and causes the display control means to specify a opposite tone area 24 of the above determined rectangular area 23 (Step S2).

Then, the remark display control means refers to the visual confirmation guide location information 18 (Fig. 2). In this instance, the information is "within the specified area" meaning that the area designated before is defined as an area to be emphasized. Thus, the visual confirmation guide area 24 is decided (Step S3).

The remark display control means refers to the visual confirmation guide pattern information 14. In the shown case, the pattern is "whitening". Having obtained information "whitening", the remark display control means instructs the display control means to clear the page buffer information in the defined visual confirmation guide area 24. The display control means executes the whitening processing (Step S4).

The remark display control means refers to the data deforming information 15. In the shown instance, the information is "No change" meaning that no deformation is made on the data within the visual confirmation guide area. If any type of deformation is designated, the remark display control means generates an instruction to do the specified type of deformation of the data and causes the display control means to execute the instruction (Step S5).

The remark display control means refers to the data attributes changing information 16. In this case, the information is "No change" meaning that any attributes of data within the visual confirmation guide area is not changed. If any type of attributes change is designated in the data item, the remark display control means instructs the display control means to execute the specified attributes changing processing (Step S6).

The remark display control means refers to the interval information 17. In this case, the information is "No interval" meaning that display data within the visual confirmation guide area is displayed with no interval. If the information 17 is "Blinking 10 times at intervals of 2 seconds and then blinker OFF", the visual confirmation guide area blinks 10 times at 2-second intervals and then returns to its usual state. This may serve as a bookmarker put between pages.

Fig. 6(D) shows a screen image displayed on the display means after execution of the above processing steps. Finally, the line 25 is displayed (Step S8). This is an exemplary emphasis of a line specified by the user by reducing the visibility of all screen area except for the specified line area (deleting the information other than the line in the shown case) with no processing of the specified display data area.

Step S9 is a routine for deciding whether to cease or continue the remark display processing. With decision to "finish", the finish processing is executed (Step S10). With instruction for "Continuation", the necessary data is stored and settings for reading subsequent data set will be executed for the next remark display (Step S11).

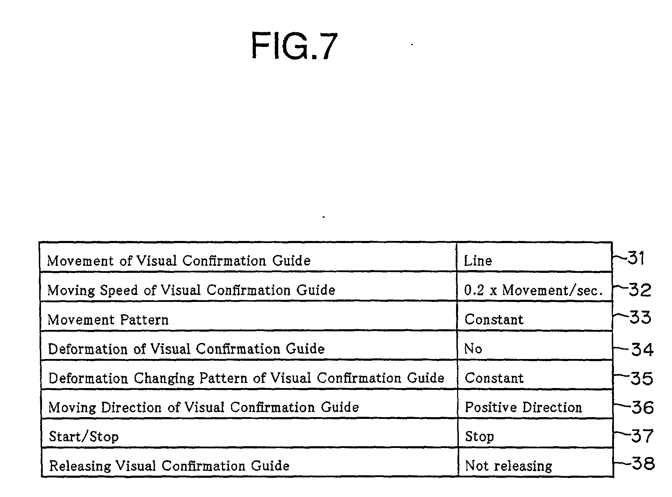

Fig. 7 shows an exemplary data structure for realizing the second embodiment of the present invention. Data item 31 is a unit of movement of the visual confirmation guide, e.g., it includes a unit specified as a character, n characters, a word, a line, a sentence, a paragraph, a chapter and a page. Data item 32 includes information specifying a moving speed of the visual confirmation guide based on a movement unit specified in Data item 31. Data item 33 stores information about the visual confirmation guide movement pattern (e.g., movement at a constant speed, with a start acceleration and end deceleration or with a pause) or parameter values set for the specified movement pattern. Data item 34 stores information about deformation of the visual confirmation guide. When deformation is set in this data item, the visual confirmation guides corresponding to the number of states are set. With no deformation set in the data item, an initially set visual confirmation guide is defined as an object to be processed. The term "deformation" used herein has two different concepts. The first concept is modification of data being displayed, for example, by rotation of character data and enlargement of image data. The second concept is modification of a visual confirmation guide, for example, by changing its area.

Data item 35 stores the deformation changing pattern information. If plural deformations of the visual confirmation guide may be desired, information indicating the type (order) of transition of states is set in this data item. For example, information is set to specify that a visual confirmation guide A is first displayed for 6 seconds and a visual confirmation guide B is then displayed. This data item can also include information for example for applying the deformation while moving the visual confirmation guide in relation with the movement information set in the data item 33. This may create such a remark display image showing waves rippling out in all directions in a pond when one threw a stone therein.

Data item 36 stores information on a moving direction of the visual confirmation guide. The visual confirmation guide can move in forward and reverse directions. Data item 37 stores start/stop control information. The movement or deformation of the visual confirmation guide can be started with "start" information and can be stopped with "stop" information. Data item 38 stores visual confirmation guide control information. This is usually set as "not cleared". If the information indicates "Cleared" state, the visual confirmation guide is deleted, the remark display is deleted and the usual display image is displayed. The above data structure can be easily implemented in the form of a table or a data array.

The management of controlling the start/stop information or the visual confirmation guide information can be achieved by using respective switching means. For example, the start switch is provided to start the movement or deformation of the visual confirmation guide and the stop switch is provided to stop the movement or deformation of the visual confirmation guide. The clearing switch is used to clear the visual confirmation guide from the display screen.

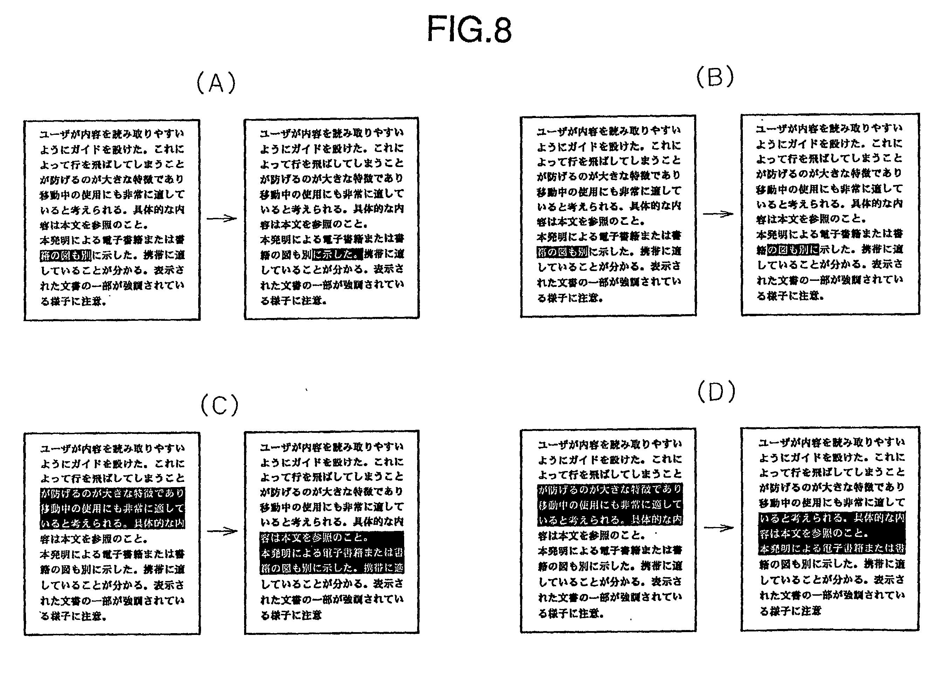

Figures 8(A) to 8 (D) show examples of display images wherein the visual confirmation guide moves. Fig. 8(A) and Fig. 8(B) show exemplary remarks of 5 characters-unit in the image. In Fig. 8(A), the visual confirmation guide moves by five characters at a time. In Fig. 8(B), the visual confirmation guide covering 5 characters moves by one character at a time.

Figures 8(C) and 8(D) show exemplary remark displays of three lines-unit in the respective images. In Fig. 8(C), the visual confirmation guide covering three lines moves by three lines at a time. In Fig. 8(D), the visual confirmation guide covering three lines moves by two lines at a time.

When the user turned on the clearing switch to temporally stop the operation of the displaying device, the visual confirmation guide cannot be moved or deformed until the user turns off the same switch (in case of carrying out the instruction for deleting the visual confirmation guide, the data item 38, by using the clearing switch).

The provision of the switching means for executing the function of the data item 37 or 38 enables the user to manually switch on and off the movement and deformation of the visual confirmation guide on the basis of the user's will. It is also possible to combine the manual control with automatic control of movement or deformation of the visual confirmation guide according to the information on the movement and deformation patterns.

It is also possible for user to manually move the visual confirmation guide instead of automated movement of the guide.

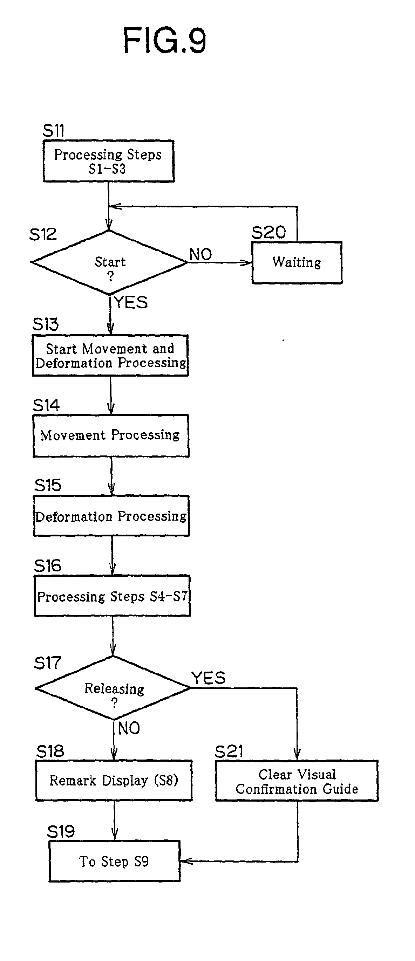

Fig. 9 is a flowchart depicting an exemplified general processing procedure according to the second embodiment of the present invention. The procedure for realizing, by way of example, the case of Fig. 8(D) will be described as follows:

Step S11 is a processing module for executing Steps S1 to S3 shown in Fig. 5. In this instance, the visual confirmation guide is assumed to have the following parameter values: The start and end addresses of the visual confirmation guide is at the top left corner and the bottom right corner of a remark display area (covering three lines) in Fig. 8(D), the polarity of its area is "positive", the pattern is "all black", the data deformation type is "no deformation", data attributes deformation is "white black inversion", the interval is "no interval" and the location of the visual confirmation guide is "within the area". The left image of Fig. 8(D) is obtained after executing Steps S1 to S3.

Step S12 is a processing module for deciding whether to start or stop moving/deforming process of the visual confirmation guide by referring to the start/stop information 37 of Fig. 7. Step S13 is a processing module for starting a moving/deforming process based on the decision made by Step S12. The moving/deforming process of the visual confirmation starts with the "start" information 37 the processing operation waits until the same process becomes possible to start by changing to "start" automatically after a specified time or turning on the switch of the start/stop instruction means with the "stop" information 37 (Step S20).

Step S14 is a processing module for processing the movement of the visual confirmation guide, which is realized by the remark display control means according to the movement related parameters (Fig. 7). It is now assumed that the movement related parameters have the following values: A unit movement of the visual confirmation guide is a single line, a moving speed of the visual confirmation guide is 0.2 line/second, a movement pattern is of a constant speed and a moving direction of the visual confirmation guide is positive. Having obtained the movement related information, the remark display control means transfers the same information to the display control means that in turn performs the process according to the information. Namely, the visual confirmation guide moves in such a way that the address of the visual confirmation guide in the display buffer is moved as defined by the parameter values.

Step S15 is a processing module for executing the deforming process, which is performed by the remark display control means by referring to the deformation related parameter values in the table of Fig. 7. It is now assumed that the deformation related parameters have the following set values: No deformation of the visual confirmation guide is made and deformation pattern is constant. Having obtained the deformation related information, the remark display control means transfers the same information to the display control means that in turn performs the process according to the information. Namely, the visual confirmation guide is deformed in such a way that the address of the visual confirmation guide in the display data buffer is deformed as defined by the parameter values. In this case, no deformation is made.

Step S16 is a processing module for executing the process for deforming display data displayed under the visual confirmation guide or setting a display interval of the visual confirmation guide. Steps S4 to S7 as described referring to Fig. 5 are performed.

Step S17 is a processing module for deciding whether to clear the visual confirmation guide. If the guide must be still displayed, the process proceeds to a remark display processing module (Step S18), If the guide must be cleared, the process proceeds to a visual confirmation guide clearing processing module (Step S21). The content of the processing module S18 is similar to that of Step S8. Step S21 is realized by clearing the preset address information or all related information of the visual confirmation guide. The processing result of Step S18 or S21 is integrated into Step S19 (i.e., the content of Step S19 is similar to Step S9) whereat the processing operation (Step S9) described with reference to Fig. 5 is further executed.

In consequence of the above processing, an image on the right side of Fig. 8(D) appears after 5 seconds.

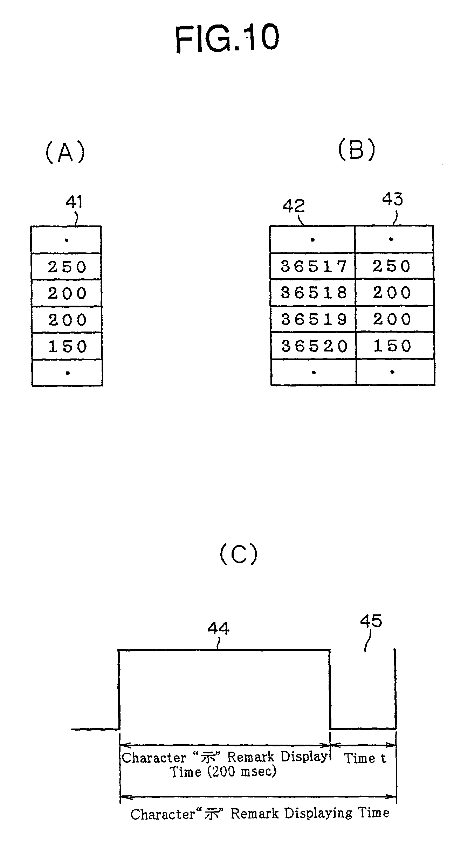

A third embodiment of the present invention will be described below. Figures 10(A) and 10(B) illustrate respective structures of data used for realizing the above embodiment. Fig. 10(A) shows a one dimensional data array for determining a movement pattern of the visual confirmation guide. Item 41 stores a duration of time (in milliseconds) for which the visual confirmation guide exists on display data (remark character display time) on the condition a unit movement of the a visual confirmation guide 31 is a single character and its movement pattern 33 is of a specified display time. The data is sorted in the character sequence defined by, e.g. , the shift JIS code. Any character can be identified by its sequence. Namely, numerical values shown in lines from top to bottom in Fig.10(A) represent time lengths of distinguishing characters 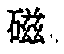 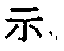 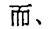 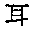 respectively. The operation of the embodiment of the present invention cannot be affected by any insertion in the i-th element of item 41 for representing an integer i that cannot be found in the normal shift JIS code. Any other code (e.g., JIS code, Unicode) may be used for defining the data sequence. The unit of character remark display time length may be of 1 clock of the system clock instead of millisecond unit.

Fig. 10(B) is another representation of the data array of Fig. 10(A). Item 42 stores decimal numerical values representing respective characters of the shift JIS code and Item 43 stores time lengths of distinguishing corresponding characters visually. A variety of representation other than the above may be also used since the present invention has no intention to restrict types of representation of remark display time length.

Although the described embodiment stores the remark display time length as a numeric value representing a time duration for which the visual confirmation guide retains on a unit of characters, the embodiment may also use a table storing parameters for determining a remark display time length and can acquire a necessary value as necessary.

A method for setting a remark display time length is described below. It is logically desired to elongate a remark display time for a character or characters that may require the user to take a relatively longer time to read and understand. In other words, the visual confirmation guide has to be moved or deformed at a reduced speed in the above case. One way to achieve this is to elongate the movement and deformation speeds of the visual confirmation guide according to the complexity of respective kanji characters, which can be judged for example by the number of strokes composing each kanji character. For example, a longer remark display time is set for a kanji character " 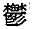 " in comparison with a kanji character " 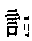 " since the former has the larger number of strokes than that of the latter.

Another method for setting the remark display time lengths is based upon frequency of occurrence of respective kanji characters. That is, the remark display time length for respective characters is increased as the frequency of occurrence of them increases or decreases, which may be designed as an item selectable by the user according to the user's interest and will. In case if the remark display time is elongated with the lower occurrence frequency of characters, a kanji character " 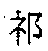 " is distinguished visually for a longer period than a kanji character " 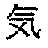 " since it appears in the less number of times as compared with the latter.

Although the above method has treated only characters as display data, it does not mean display data is limited to characters only. For example, an image may be displayed and distinguished visually for a time length preset according to its complexity or frequency of occurrence. The complexity of image data may be determined by the number of bits, the number of colors, the number of gradation levels and so on. Image number is used like the character codes. The frequency of occurrence is information independent from the kinds of information (such as characters and images).

The remark display time length is not limited to a single character. For example, a total remark display time of characters contained within a visual confirmation guide may be set as a remark display time length for the visual confirmation guide.

Fig. 10(C) shows a timetable for distinguishing a kanji character " 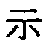 " visually. This character is distinguished within a visual confirmation guide for the time 44 preset as remark display time, then the visual confirmation guide is transferred to the next hiragana character " 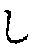 " within the time 45 that is added to the time 44 to define the timing of transferring the visual confirmation guide from the character " 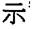 ".

The remark display processing operation using remark display time settings is as follows:

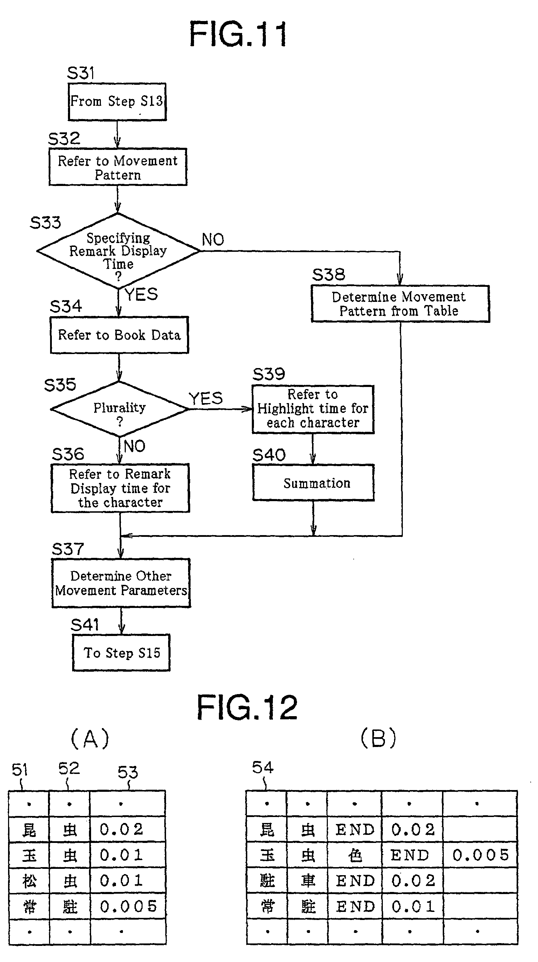

Fig. 11 is an exemplary flowchart depicting a remark procedure using remark display time settings. The control of the remark display time is concentrated on a transferring pattern among parameters for a visual confirmation guide. The operation will be described with further reference to the movement data processing portion shown in Fig. 9.

Step S31 is a processing module for execution of processing operation to Step S13 included in the flowchart of Fig. 9. The remark display control means first refers to the movement pattern value 33 in the table of Fig. 7 (Step S32) for beginning the movement processing. In Step S33, the remark display control means examines whether the movement pattern value concerns the remark display time setting. If so, the remark display control means refers to the display data under the visual confirmation guide (Step S34) and, then, examines whether the display data consists of plural elements (Step S35) . If the data does not include plural elements, the remark display control means determines remark display time for the display data referring to Fig. 10(A) (Step S36). If the data under the visual confirmation guide consists of plural elements, the remark display control means refers to remark display time values for respective elements in Fig. 10(A) (Step S39) and then calculates a sum of the obtained values of the data elements to determine remark display time for a whole unit of the display data (Step 540). The remark display control means determines other parameters relating the movement of the visual confirmation guide (Step S37) and then proceeds to the deformation processing (Step S41). Step S40 determines the remark display time for the display data unit composed of plural data elements (e.g., characters) by a total of time values of the elements (characters) under the condition that the visual confirmation guide distinguishes a whole unit of the data (characters) visually and moves at a time by the length of the whole unit to cover the next data unit. However, in case that each travel of the visual confirmation guide is shorter than the length of a remark data unit of plural elements (characters), the remark display time may be set based on averaged time, maximum time, minimum time of each data element. It is also possible to determine the remark display time of a whole data unit by integration of units of remark display time.

Although the remark display time is treated as one of parameters of a movement pattern of the visual confirmation guide in the above example, it may also be treated as one of parameters of deformation pattern 35 (Fig. 7).

The display data remark display time based on the complexity or frequency of display data can be decided by a method for directly defining the time as shown in Fig. 10(A). Alternatively, it can be determined by storing a method for extracting remark display time as described below.

Representing, for example, remark display time by T and the number of strokes of a character by S, the time T is expressed as follows:$\text{T = αS,}$ where α is a proportional constant. Representing frequency of a character by F, the time T is expressed as follows:$\text{T = β/F,}$ where β is a proportional constant.

Consequently, the remark display time of display data can be determined by calculating the remark display time based on the number of strokes (complexity) of each character referring to a table for defining the correspondence of each character code to the number of character strokes. Similarly, the remark display time based on the frequency of each character can be determined according to the above equation by using a table prepared for indicating the correspondence of respective characters to frequency of their occurrence.

The proportional constants α and β in the respective equations may be preset or adjusted by a user.

Next, the forth embodiment according to the present invention will be described. Figures 12(A) and 12(B) show exemplary data structures of tables defining remark display time values, which are used for explaining another example of remark display of characters (display data) based on the frequency of their occurrence. Table of Fig. 12(A) shows that a preceding character 51 and a subsequent character 52 are enhanced for time 53. Remark display time 53 is determined based on joint frequency of preceding and subsequent characters. (The term "probability" may be also used instead of the term "frequency". The probability and the frequency can be converted to each other by defining proportional constants. They are not different in substance from each other.) For example, the entry ( 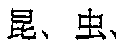 0.02) indicates that the probability of occurrence of the subsequent character 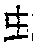 after the preceding character 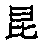 is 0.02. Similarly, the entry ( 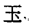 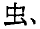 0.01) indicates that the probability of occurrence of the subsequent character 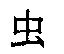 after the preceding character 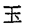 is 0.01.

A reason for determining the remark display time based on the joint frequency or probability of characters is as follows: For example, a kanji character 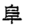 is usually of low frequency in use while a word 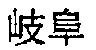 (the name of a district in Japan) is frequently used. Since the character 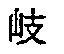 is usually of low frequency in use, the probability of occurrence of the character 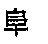 after the character 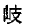 is considerably high. On the contrary, information content of the character 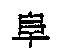 when occurred after the character 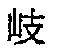 is small. A character 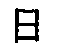 is of high frequency in use but no word 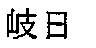 is used. Hence, the probability of occurrence of the character 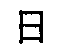 after the character 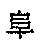 is very low. This means that the character 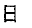 has a large information content. It is reasonable to set longer time of distinguishing characters having larger information content.

For easy understanding, tables of Figs. 12(A) and 12(B) show the characters in replace of corresponding character codes stored in practice.

It is not practical to store entries for all combinations of characters in the remark display time reference table Fig. 12(A). Therefore, its entries are limited only to characters of high joint probability and other characters are stored with usual probability (frequency) in singular use. For example, the remark display time reference table is constructed of two tables, one of which stores remark display time values based on joint probability of characters as shown in Fig. 12(A) and the other stores remark display time values based on probability of each character as shown in Fig. 10(A) or 10(B).

In this case, the remark display control means examines the table consisting of three value's combination in a table of Fig. 12(A) by using a current character and a just preceding character as keys. Having found the corresponding entry, the remark display control means extracts the probability value of the current character from the entry. If no entry was found in the table, the remark display control means can easily retrieve the probability value of the current character from the entry of Fig. 10(A) or Fig. 10(B). Another aspect of the invention can be realized as follows: For example, only joint probability of a combination of characters is acquired from the table shown in Fig. 12(A). The table of Fig. 10(A) or Fig. 10(B) which don't consider the joint of character aren't used. If no relevant entry was found in the table, each of the characters is given a constant probability value.

A data unit to be distinguished visually may be, instead of the specified number of data (e.g., characters), a word of variable length. Fig. 12(B) shows a table for distinguish the display data visually on the word by word basis, in which combinations each of a word and its remark display time value are stored. In the practice, the shown characters are replaced by corresponding character codes. In Fig. 12(B), "END" is a terminating symbol placed after each word and indicates the word consists of a character string starting from an entry 54 on the left side of the symbol "END". "END" is given a code different from a character code (for example, it may have a decimal code 65535 according to the shift JIS). A numeric value on the right side of "END" relates to the probability of occurrence of the word.

The remark display control means compares display data (a word consisting of a character string) captured by the visual confirmation guide with each character string on the left side of each "END" symbol in the table of Fig. 12(B). When a match is found, the remark display control means acquires a probability value shown on the right side of the "END" symbol.

A period of time T for distinguishing the word visually can be determined by converting the probability value according to the following equation.$\text{T = Γ/F}$ (where Γ is a proportional constant)

Although the embodiments 3 and 4 determined the remark display time based on the data complexity and the data frequency respectively, it is possible to determine the remark display time for display data according to the combination of the complexity and frequency of data being displayed within the visual confirmation guide.

The functions and operation of the remark display control means have been described above. Now, the fifth embodiment of the present invention, which relates to an human interface of the data displaying device according to the present invention, will be described below.

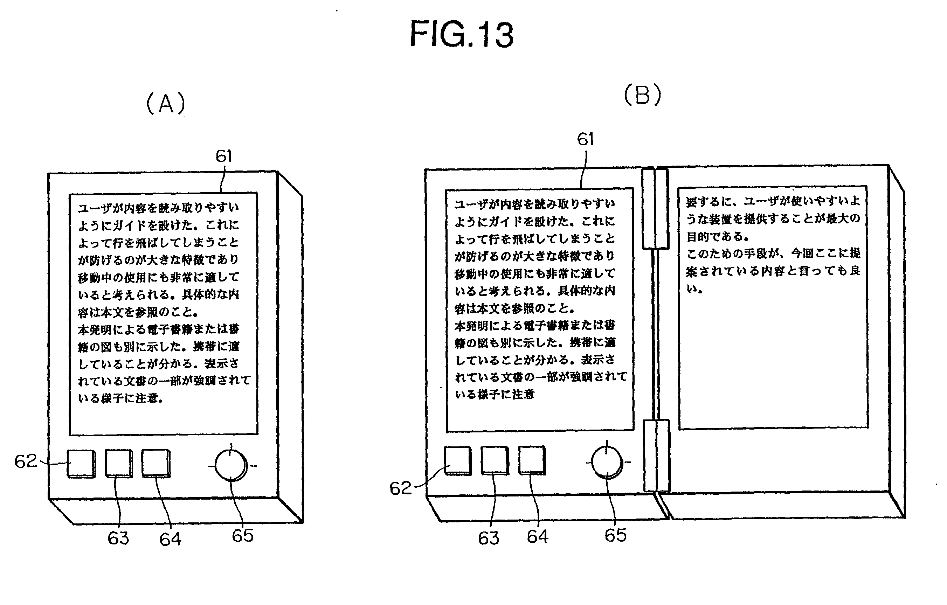

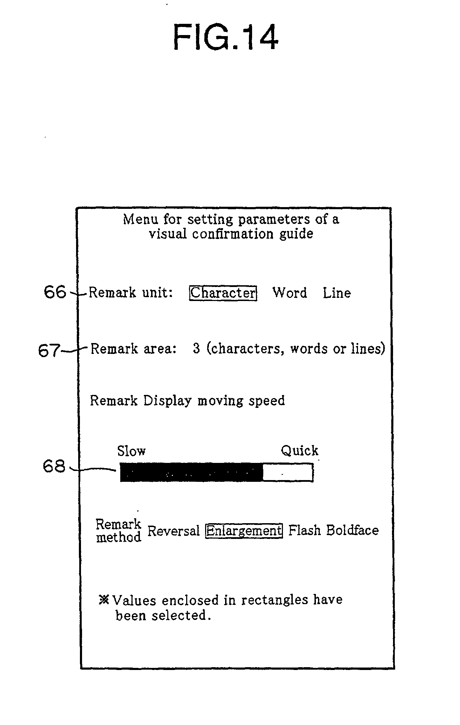

Figs. 13(A) and 13(B) are external views of a data displaying device according to the present invention. Fig. 14 shows an exemplary menu screen for setting parameters of remark display. In Fig. 13(A), numeral 61 designates a display means or display data and numeral 62 designates a switch button for control of start/stop of the remark display. With display data being displayed on the display means, the switch button 62 is pressed to start distinguishing the display data visually. With the data being distinguished visually, the switch button 62 is pressed to clear the remark display.

A switch button 63 is a two functional switch for control of moving direction of a visual confirmation guide and for temporally stopping the remark display. For example, in case of changing the above functions with the default value set to the forward direction, the user repeats pressing of the switch button 63 to a desired function. Every pressing of this button changes the function to pausing, reverse moving and forward moving of the visual confirmation guide and the pausing again. A switch button 64 is used for setting parameters relating to the visual confirmation guide. Pressing this button causes a menu to appear on the display screen as shown in Fig. 14. A selector (dial or switch) 65 is used for selecting parameters of moving speed, deforming speed and blinking speed of the visual confirmation guide. A degree of change can be adjusted by turning this dial (or switch). Turning the dial 65 can also be used for selecting setting items of the menu for setting the visual confirmation guide parameters, which menu is displayed by pressing the button 64. The dial 65 can be used as a pointing device if it is provided with a sensor for detecting a direction of a force applied thereto.

Fig. 13(B) is an external view of a data displaying device having two display screens in its spread state. Control components similar to those of the device of Fig. 13(A) are given the same reference numerals.

It should be noticed that types, quantity and arrangement of selecting means (switches 62 to 65 in the shown case) are not limited to those shown in Figs. 13(A) and 13(B). The device may be designed with any other type, quantity and arrangement of the selecting means.

Fig. 14 shows a menu for setting parameters of the visual confirmation guide, which menu appears on a screen by pressing the switch button 64 shown in Fig. 13(A). Items of the menu are items selectable from plural candidates, settable numerical values and analog display data. The menu is not limited to the shown example. It may have other different items in different arrangement.

### (Embodiment 2)

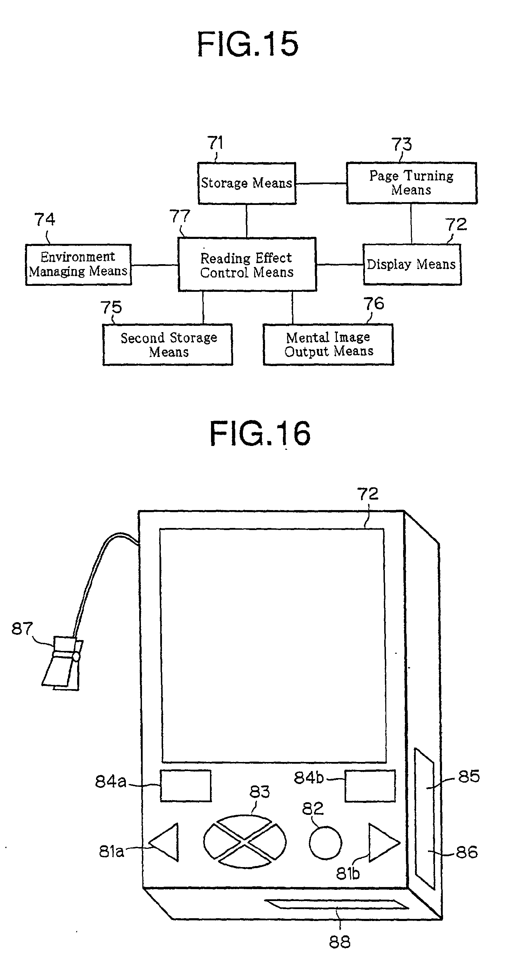

Fig. 15 is a block diagram of an electronic book displaying device according to an aspect of the present invention. Numeral 71 designates a storage means that may be any of magnetic storage media such as FD, MO and CD and/or LSI media such as IC card, smart media. The storage means 71 stores book data, and processing program for controlling device and various kinds of necessary data. Numeral 72 denotes a display means for displaying the book data and other information on its display screen and may be a liquid crystal display (LCD), CRT or plasma display. Numeral 73 designates a page turning means that may be a button or cursor and can turn pages (images) of book data in a forward or reverse direction on the display screen of the display means. The page turning means includes functions for scrolling lines, turning pages by a cursor, changing a data image to a different viewpoint scene.

Numeral 74 designates an environment managing means for sensing information relevant to a psychological state of a reader and reading environments and managing the information. Numeral 75 denotes a second storage means for storing different viewpoint scene data or mental image data, which will be described later in detail. The second storage means may be of the same type as the storage means 71. The second storage means may be common with the storage means 71. Hence, the second storage means will be described hereinafter as integrated in the storage means 71 unless otherwise specified. Numeral 76 designates an output means for outputting the mental image data accumulated in the second storage means. The output means outputs sound signals through a speaker means, vibration from an oscillator and a deformed image.

Numeral 77 denotes a control means that can produce reading effect data desired by the user for the book data displayed on the display means according to user's specific environment managing information stored in the environment managing means and controls the reading effect data to output to the display means or mental image output means. This means may be replaced by a central processing unit (CPU).

Fig. 16 shows an external appearance of an electronic book displaying device that is a representative embodiment of the present invention. In Fig. 16, numeral 72 designates a display means that was described above with reference to Fig. 15. Indication means 81a and 81b are used by the user for instructing to turn a page and a selector button 82 is used by the user to change a screen image to another when different viewpoint scene data consisting of plural images was added to a single page. A cursor key 83 is used for moving a cursor on an image screen of the display means. The components 81a, 81b, 82 and 83 composes the page turning means shown in Fig. 15.

Sound output means 84a and 84b that is an exemplary mental image output means and constructed from small type speakers. Although the device shown in Fig. 16 has two speakers, it may have one or three (or more) speakers. The number of speakers has no effect on the embodiment of the present invention. However, the provision of plural speakers is desirable for increasing the reading effect since the two speakers can output stereo sound or three speakers can create deep stereo sound. In Fig. 16, the electronic book displaying device outputs voice or sound through speakers mounted thereon. The sound output means may be external speakers, earphones or a headset, which are connected to plug sockets provided on the device body.

Numeral 85 designates a temperature sensor for measuring the user's hand temperature and numeral 86 designates a humidity sensor for sensing sweat on fingers of the user. The temperature sensor and the humidity sensor can be integrated into a single unit as shown in Fig. 16. Numeral 87 is a heartbeat sensor for measuring user's heart rate. Numeral 88 is a slot for insertion of a storage means with book data recorded thereon.

The electronic book displaying device incorporates a vibrating means. Book data or image processed book data to be output onto the display means, voice and sound to be output through the sound output means and vibration to be output by the oscillating means may independently or cooperatively composes mental image data.

The arrangement of the above page turning means, sound output means, heart rate meter, temperature sensor and humidity sensor are not restricted to those shown in Fig. 16. However, the temperature/humidity sensor must be disposed on the side or bottom surface of the device body so that the user may touch the sensor while keeping in hand the device. The display means 72 may be a LCD having a tablet function that allows the user to designate a cursor location with a pen on its display screen instead of the cursor key 83.

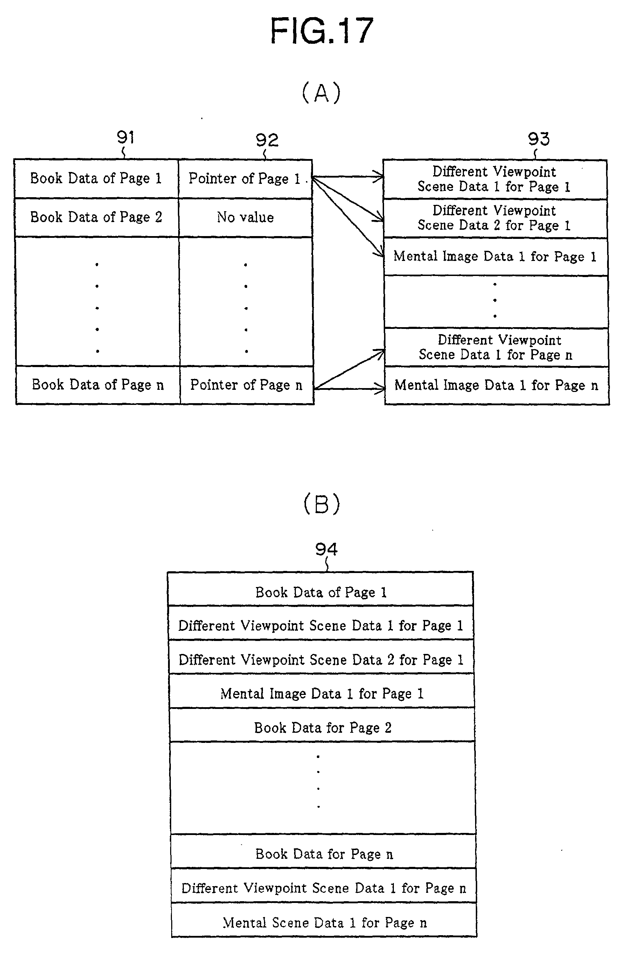

Figures 17(A) and 17(B) show summaries of a format of book data to be recorded on a storage means. Fig. 17(A) shows two formats of book data: the example shown on the left side is for a storage device having a structure of book data of a usual electronic book display and the example shown on the right side is for the second storage device featuring the present invention in the case two storages have different data structures. Numeral 91 designates book data that is disposed in one unit on each page. Each page is provided with a pointer 92 to the second storage device. Each pointer points a second storage address wherein a different viewpoint scene data (representing the same page image viewed from a different viewpoint) or mental image data 93 of each book data page is stored. The different viewpoint scene data or mental image data in the second storage device may have different data units for each page as shown in Fig. 17(A).

Fig. 17(B) shows a data structure of a storage in which the storage device and the second storage device are integrated together. As shown in the data format 94, pointers are omitted and book data, different viewpoint scene data and mental data are subsequently arranged for each page.

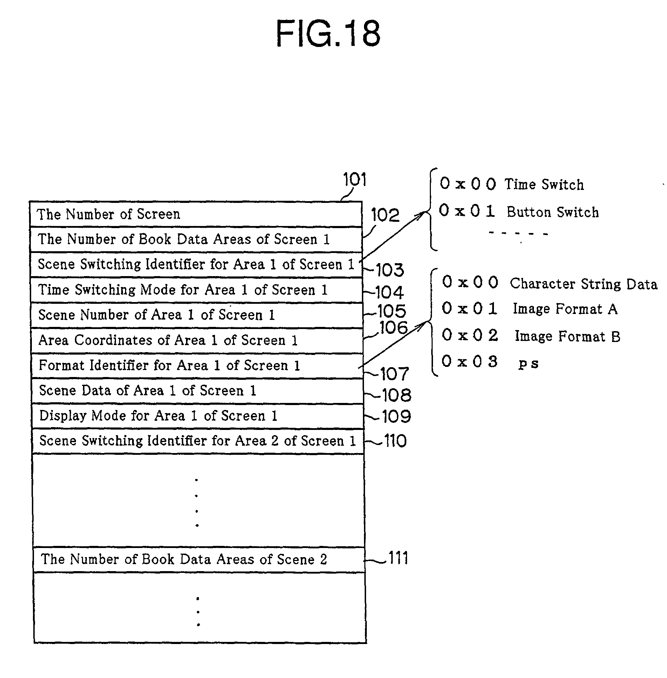

Fig. 18 shows an exemplary data format for one page of book data. Since a book data and a different viewpoint scene data are replaceable by each other, both screen data are dealt with as the same screen data as shown in Fig. 18. Generally, screen 1 is book data shown in Fig. 17, screen 2 and screen data thereafter are different viewpoint scene data and so on.

Each page has a field 101 storing the number of screens (book data screens plus different viewpoint scenes), a field 102 storing the number of areas into which each page is divided according to the data format or contents, and fields thereafter for settings necessary for processing each area of each screen. Areas of the screen 1 will be described by way of example in detail.

A field 103 stores an identifier of changing a scene of the area 1 as shown Fig. 18. The identifier has a classification code: code value 0x00 means changing a scene to another by time and code value 0x01 means changing a scene to another by pressing a button.

The field 103 with the identifier 0x00 is followed by a field 104 in which a scene changing mode for deciding how to set time for changing the scene. The scene time switching mode is selectable to set time proportional to a distance from a starting point of book data displayed on the display means to this area or time proportional to visual reading time from a starting point of book data displayed on the display means to this area or time specified on a timer. When the time set in the field elapsed, the scene is automatically changed to a scene specified by reading environment information.

It is possible not to change a scene to a specific scene by setting the time to infinity or not to present a preceding changeable scene by setting the time to zero.

A field 105 stores a scene number of the area 1, which is referred to by this number when exchanging information. A field 106 stores one, two and three dimensional coordinates values data of scene data of the area 1. A field 106 stores an identifier of a format of the area 1. The identifier has a classification code (Fig. 18): code value 0x00 indicates that the area 1 is described by character strings. The format is not restricted to the above description.

A field 108 stores a description of scene data of the area 1 and a field 109 stores a description of a display mode of the area 1. The display mode allows the user to set a display method (e.g., progressive display, blinking, normal display) or display time. In field 108 pointer indicating area where file name and screen data are stored can be used.

A field 110 stores an identifier of changing a scene for an area 2 of the screen 1. Fields after the field 110 store values of the area 2 corresponding to the fields 104-110 for area 1. Values are accumulated by the number of areas, which is preset in the field 102. A field 111 stores the number of book data areas 2 and thereafter, in which values described with reference to the screen 1 are accumulated by the number of images, which is set in the field 101.

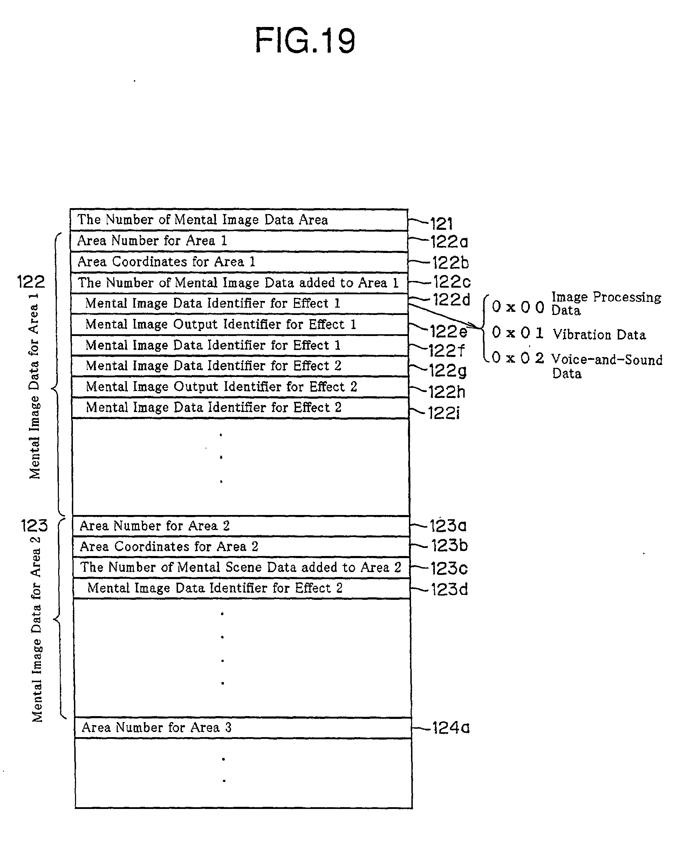

Fig. 19 shows an exemplary format of mental (mind) image data for a page. As shown in Fig. 19, a field 121 storing the number of mind image data areas (reading effect marks) added to the page is followed by fields 122 to 12n (by the number of the mind image data areas) in which respective parameters relevant to the mental image data are stored.

The mind image data for each areas (122-12n) includes field (122a-12na) storing a mind image data area number identifying a mind data area in a page, a field (122b-12nb) storing information on a location of a mental image data area and a field (122c-12nc) storing the number of mental image data added to an area.

Fields (122d, 122g...) store identifiers specifying types of mind image data by the number of the mind image data. Fields (122e, 122h...) store mind image data outputting methods by the number of the mind image data. Fields (122f, 122i...) store mind image data or mind image data producing methods by the number of the mental image data.

The mental image data identifiers (122d, 122g...) are described by numerical values like Fig. 19, e.g., the identifier 0x00 indicates that the mental image data is used for image processing. A type of image processing with deformation, which is made on image data of a specified area of a different viewpoint area or specified book data, and parameters necessary for conducting the image processing are set in the above fields.

With the mental image data identifier 122d having a value 0x01, the mental image data to be stored in the mental data field 122f is vibration relevant data. Consequently, vibration parameters such as vibration frequency, time and amplitude necessary for driving a vibration generating oscillator in the mental image output means are set and stored therein. Similarly, when the mental image data identifier 122d has a value 0x02, effect data to be stored in the field 122f is voice data and parameters such as man voice or woman voice, loudness and other vocal sound features are set and stored therein.

In the above case, the mental image data is directly stored in the fields but is not restricted to this. It is also possible to store in this field a pointer to an area in which data is stores or a name of a file storing the data. An object to be pointed by the pointer may be a reference table for mental image data.

The mental image output identifiers (122e, 122h...) store flags for deciding whether to automatically output mental image data or to manually output the mental image data by specifying an area by using a cursor key 83 (by a user) when a book data area to which the mental image data is related (this area may be referred hereinafter to as a reading mark or a mental image data area) is displayed on the display means.

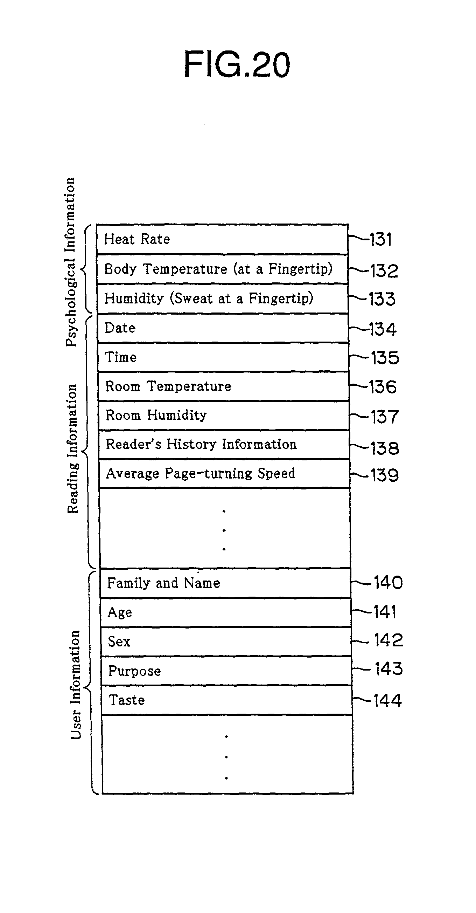

Fig. 20 shows an exemplary data structure of reading environment information to be managed by the environment managing means. The reading environment information consists generally of psychological state related information (psychological information), reading state related information (reading information) and user's information.

A field 131 contains heart rate data, a field 132 contains body temperature data (temperature at fingertips) and a field 133 contains a humidity data (sweat from fingertips). The heart rate, body temperature and humidity are current time output of the temperature sensor 85, humidity sensor 86 and heart rate meter 87, which have been described before with reference to Fig. 16. The information 131 to 133 composes user's psychological information. It is apparent that the psychological information is not restricted to the above three kinds and may be varied by using other kinds of sensors.

An exited state can be represented by high value of the above 3 kinds of psychological information. Expressing the heart rate, body temperature and finger sweat in a normal state of a person by S0, T0 and Y0 and their value at time t by St, Tt and Yt respectively, a psychological degree Kt representing a psychological state of the user at time t can has the following approximated expression:$\text{Kt = a1(St-S0)+a2(Tt-T0)+a3(Yt-Y0)}$ where a1, a2 and a3 are proportional constants. However, relational functions are not limited to the above linear expression and they may be those indicating relations to the heart rate, body temperature and finger humidity.

A field 134 stores date of reading, a field 135 stores the time at which the user started the reading, a field 136 stores a room temperature when the user started reading, a field 137 stores humidity in the room when the user started reading and a field 138 stores reader' history information. The values 137 and 136 are obtained from the temperature sensor 85 and the humidity sensor 86 just after switching on the electronic book displaying device and before being touched by the user.

The reader's history information stores how many times the user has read the objective portion of book data. The reader's history information can manage the data on the basis of each page of the book data or the different viewpoint scene data. A field 139 stores an average speed (interval) of turning pages, which value is determined according to the page turning intervals measured by a timer incorporated in the CPU or the reading effect control means. The field 138 may store pointers indicating respective areas containing the data. Fields 134-139 are used for storing the above described reader's history information.

A field 140 stores the reader's name, a field 141 stores the user's age and a field 142 stores the user's sex. A field 143 stores the user's purpose and a field 144 stores the user's taste. Once the user's name was inputted, the reader's history information 138 can be managed by the user's name. The user's purpose 143 can be set through a user's interface and selected in accord with the operation modes of the electronic book displaying device, e.g., quick reading mode, learning mode, latent power developing mode, relaxation mode, sentiment cultivation mode and so on. The user's taste 144 includes user's taste information, e.g., taste for classic music or pops music, light tone screen or strong tone screen and calmness or excitement.

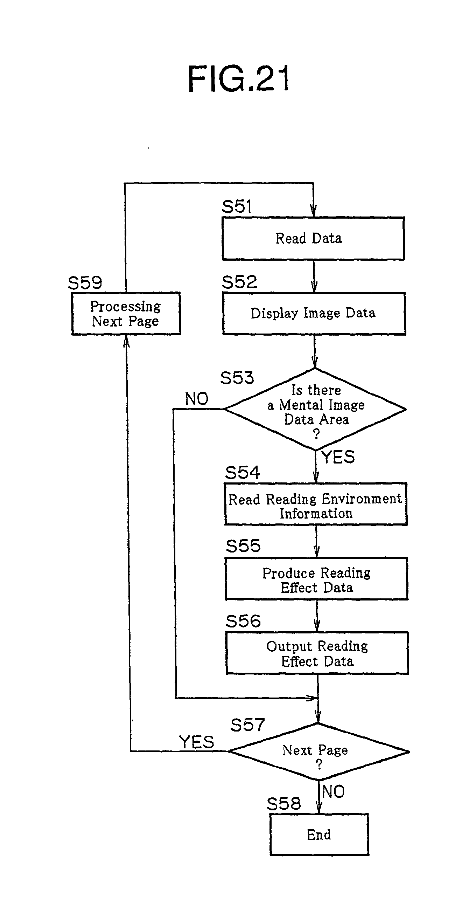

Fig. 21 is a flowchart depicting an example of the operation of the reading effect control means according to the present invention. Step S51 is a processing module for reading necessary initialized data, book data, different viewpoint scene data and mental image data into the reading effect control means. Step S52 is a processing module for transferring display data of a corresponding page from the reading effect control means into a display buffer and display the data. The acquisition of the initialized data includes reading the outputs of the temperature sensor 85 and the humidity sensor 86 into the fields 136 and 137 (for room temperature and humidity) of the reading environment information (Fig. 20) and reading the date and time from a calendar or timer (incorporated in the CPU or reading effect control means) into the fields 134 (date) and 135 (time) for the reading environment information. A page to be displayed is set as a default vale unless otherwise specified. For example, the default is set to open an initial page or a page that was finally open at the last time.

Step S53 is a processing module for examine whether a reading effect mark is on the displayed page. When no mark is found (that is, no need for increasing the reading effect), the process proceeds to the next processing module for discriminating whether to display the next page or to finish the processing. When the reading effect mark was found at one or more places on the page being displayed, the following processing is conducted.

Step S54 is a processing module for reading the reading environment information into the reading effect control means. Psychological information data included in the environment managing information is updated first in stable state, e.g., 5 minutes after the beginning (date and time) of the reading and periodically thereafter at a constant interval of, e.g., 1 minute or every time when turning a page (opening the next page) . The reader's history information 138 (Fig. 20) includes records of accessing to each page of the book data or each area of the different viewpoint scene data. The user's information (Fig. 20) includes values preset by the user through the user's interface.

Step S55 is a processing module for creating the reading effect data using the above reading environment information. The meaning of "increasing the reading effect" according to the present invention is to supply the user with optimal image, voice and sound, vibration in accord with user's feeling, excitement state degree, taste, purpose or reader's history. Among the psychological information, reading information and user's information, which are stored in the environment managing means of Fig. 20, suitable mental image data and different viewpoint scene data are selected using an effect data table (to be described later) or related graphs and, then, synthesized to realize the above purpose. This will be described in detail later.

Step S56 is a processing module for outputting the above produced reading effect data. The reading effect control means refers first to the code value of the identifier 103 for changing a screen image of the book data. With the identifier 0x00, the reading effect control means refers to the timer mode field 104 and decides the time to output image data 108 of this area and mental image data added to that area. The reading effect control means then output the reading effect data to the display means or the mental image output means. The mental image data is output at the timing synchronized with outputting of the different viewpoint scene data. This will be described in detail later.

Step S57 is a processing module for examining whether display of the next page is requested or not. When the next page is requested, the preparation for displaying the next page is performed (Step S59). With no request, the processing is finished (Step S58).

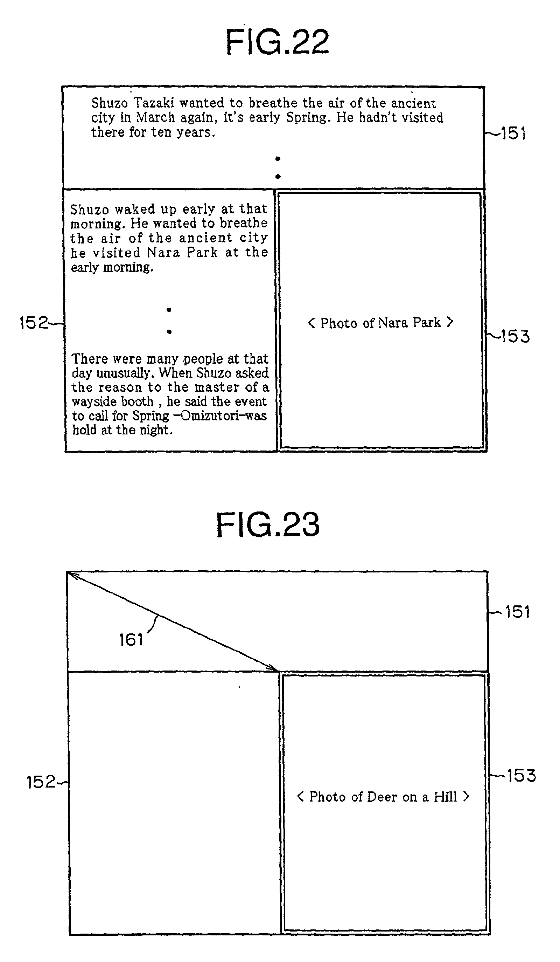

Fig. 22 shows an example of a specified page being displayed on the display means. As shown in Fig. 22, the page is divided into three areas 1(151), 2(152) and 3(153). The area 3 is an illustration area wherein a photo of Japanese National Park "Nara" is presented. The whole area 3 is marked with a reading effect mark (with a frame as shown in Fig. 8) to distinguish from the other areas. In Fig. 22, the area 3 is surrounded by a framing line that is not displayed in practice. The area 3 is given a reading effect mark that is distinct from the other area.

The screen image of Fig. 22 is displayed by bringing images from a preceding page or a proceeding page by pressing page turning means 81a or 81b. In this case, the screen image is changed on page by page basis. Therefore, the entire area 3 is displayed substantially at the same time with the other area images. It is also possible to continuously turn pages by scrolling the screen image line by line by using the cursor key 83. For example, in case of turning a page by reverse scrolling, it is possible to conduct the line by line scroll of the image from the state in which a top end of the area 3 is positioned at the top end of the screen to the state in which the top end of the area 3 is positioned at the bottom end of the screen. Therefore, when the image data is displayed (Step S52), the reading effect control means can recognize the presence of mental image data by examining the existence of any one of the framing lines of the reading effect mark on the display means (Step S53).

Fig. 23 is a view for explaining an exemplary timer mode for deciding the timing of outputting the reading effect data in Step S56. Referring to the same screen image of Fig. 22 with the same reference numerals, the operation is described as follows: Numeral 161 designates a distance r from a starting point of the screen to a starting point of an area to which mental image data pertains. When the diagonal of the screen image has a distance s, the user usually starts reading a displayed image from the starting point and ends the reading at a right bottom point of the screen. Now let assume that time Tf is necessary for reading screen data from the starting point to the end point and no difference exists between time lengths reading three areas. In this case, the user starts reading the area 3 at time Tr = Tf X r/s.
One of screen time switching modes according to the present invention is as follows: When time Tr elapsed after display of a part or a whole of book data to which mental image data pertains, the photo of the Nara Park is changed to a photo showing a deer on a hill. While a book data area with plural different viewpoint scene added thereto is read, a different viewpoint scene can be replaced by another different viewpoint scene. In this case, mental image data is also output if it is added to the different viewpoint scene data to be displayed. This output mode is called visual distance mode.

Another scene time switching mode considers time for visualizing each area. For example, the area 1 contains character strings that can be read at a rate of time Tc per character and the area 2 also contains character strings that can be read at a rate of Tc2 per character. In this case, the user starts reading the area 3 at time Tm.$\text{Tm = Tc1Xm1 + Tc2Xm2}$ where m1 is the number of characters in the area 1 and m2 is the number of characters in the area 2. Similarly to the above case, when time Tm elapsed after display of a part or a whole of book data to which mental image data pertains, the photo of the Nara Park is changed to a photo showing a deer on a hill. This outputting mode is called visualization mode.

In the timer mode, it is possible to set time not directly relating to the time at which on starts reading an objective area. For example, the photo of a deer on a hill can be displayed before the user could visually recognize the photo of the Nara Park by setting the changing time to zero. In this case, the user cannot recognize the photo of the park and can feel the photo of a deer directly appears on the screen.

In Step S56, the reading effect control means refers to the time switching mode field for each area of displayed book data (screen data), recognizes the distance mode or visualization mode or timer mode, determines the display waiting time predetermined for the mode and outputs the reading effect data when the waiting time passed.

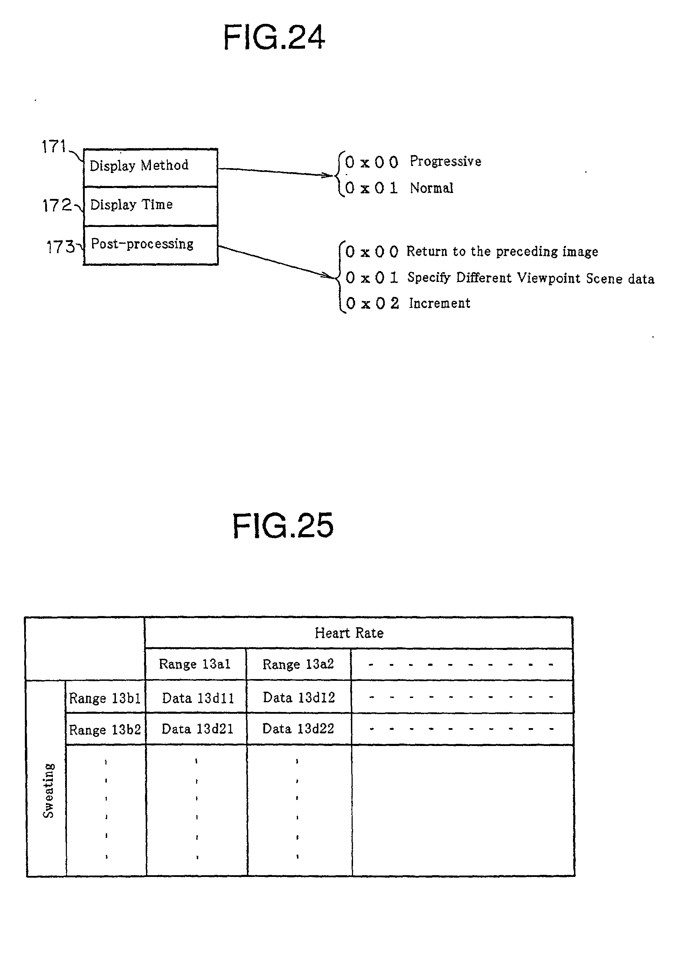

Display modes to which reference is made before performing display of image data by the time switching mode will be described regarding the processing module Step S56. When a part or the whole of mental image data was displayed on the display means, the reading effect control means refers to a value of the display mode in the book data being displayed. Fig. 24 shows an exemplary data structure for the display mode. A field 171 stores the display method. With a code value 0x00 of the display method, a selected different viewpoint scene data is displayed gradually increasing its sharpness (in the progressive mode). With a code value 0x01, the usual (normal) display is obtained. Other codes are prepared for blinking display, inverse and flash so on. A care shall be taken not to confuse the field 171 with the image processing data in the mental image data identifier 122d of Fig. 19. The image processing data is accompanied by deformation of a display image whilst the field 171 does not cause an image to be deformed. A field 172 stores the time for which a different viewpoint scene data is displayed. The data is displayed for the time preset in this data field. A field 173 defines a processing method applied when the display time exceeds that preset in the field 172. With a code value 0x00 in the field 173, the display returns to the preceding image after displaying the different viewpoint scene data for the preset time. With a code value 0x01, a scene number in the field 105 of Fig. 18 is designated and the designated image data is then displayed. With a code value 0x02, the display is changed to another different viewpoint scene data whose scene number is larger than by 1 that of the current image data.

An example of the processing relevant to Step S55 of the flowchart of Fig. 21 is described below. Having referred to the reading environment information in Step S54, the reading effect control means refers now to the reading effect table. Fig. 25 shows an example of the reading effect table showing the relationship between the reading effect data to be output and the reading environment information. In Fig. 25, values of heart rate 131 are shown in divided ranges of 13a1 to 13an on the horizontal axis (in rows) and values of sweat 133 on a fingertip are shown in divided ranges of 13b1 to 13bm on the vertical axis (in columns). Reading effect data 13d11-13dmn to be output can be designated in corresponding cross cells between heart rate value divisions and sweat value divisions. For example, the reading effect control means reads the reading effect table accumulated in the second storage means and refers to the reading environment information. When the heart rate value and the sweat value stored in the environment managing means 74 are in the ranges 13a2 and 13b1 respectively, the reading effect control means selects the reading effect data 13d12 in the reading effect table, which data corresponds to the above heart rate and sweat values. The selected reading effect data is then output to the mental image data output means or the display means.

The table shown in Fig. 25 is organized as a two dimensional table for the heart rate and the sweat but it is usually expanded to an n-dimensional table. The reading environment information stored in the environment managing means 74 is shown in Fig. 20. The items shown therein are managed in respective tables. The reading effect data 13d11 to 13dmn may be, not actual data, but file names or pointers showing locations of actual data.

The reading effect control means first compares each field value of the reading environment information with each value of n-dimensional axis of the reading effect table. Next, the reading effect control means refers to a value in a cell found at a cross point of the two corresponding cells, determines the type and the output level of the mental image data or the different viewpoint scene data to be output and generates reading effect data to be output.

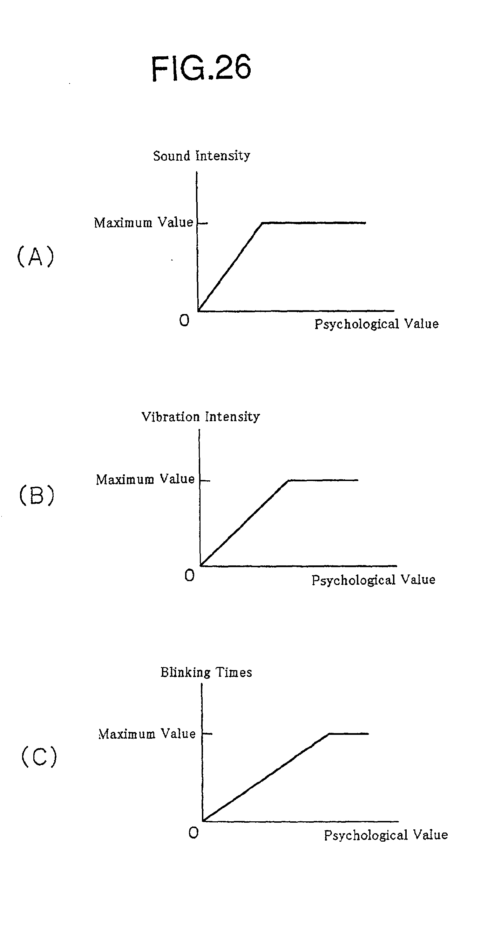

Figures 26(A), 26(B) and 26(C) show respective graphs for explaining another aspect of the reading effect control means. Different from the above described embodiment wherein the reading effect data is matched to a range of psychological information values, the present embodiment decides the type and the output level of mental image data according to the relevant graphs showing the relationship between the psychological state level defined by synthesis of psychological information and the mental image data to be output. It decides the different viewpoint scene data by referring to the reading effect table.

In Figs. 26(A), 26(B) and 26(C), the horizontal axes represent the psychological state level Kt defined above and the vertical axes represent sound intensity, vibration intensity and the number of blinks respectively. The graph of FIG. 26(A) shows the relationship between the sound intensity and the psychological state level, the graph of FIG. 26(B) shows the relationship between the vibration intensity and the psychological state level and the graph of FIG. 26(C) shows the relationship between the number of blinks and the psychological state level. As seen in Fig. 26, each parameter takes a value in the range from zero to the maximum value.

In Step S54, the reading effect control means acquires psychological information at the time t from the temperature sensor, humidity sensor and heart rate meter and stores the obtained values in the psychological information fields of the reading environment information area. In Step S55, the reading effect control means refers to the psychological information field values and calculates the psychological state level. The reading effect control means seeks the sound intensity, the vibration intensity and the number of blinks on the respective graphs, which values correspond to the present psychological state level (Fig. 26). The reading effect control means further refers to the reading effect table to find the relationship between the reading effect and the parameters other than those used for control of the mental image data output. Referring the table of Fig. 25, the reading effect control means determines, as described before, the method of outputting a different viewpoint scene data and the scene number and synthesizes the data with the prepared mental image data to generate the reading effect data. It is of course possible to prepare graphs of parameters other than those shown in Fig. 26(A) (sound intensity), 26(B)(vibration intensity) and 26(C)(the number of blinks).

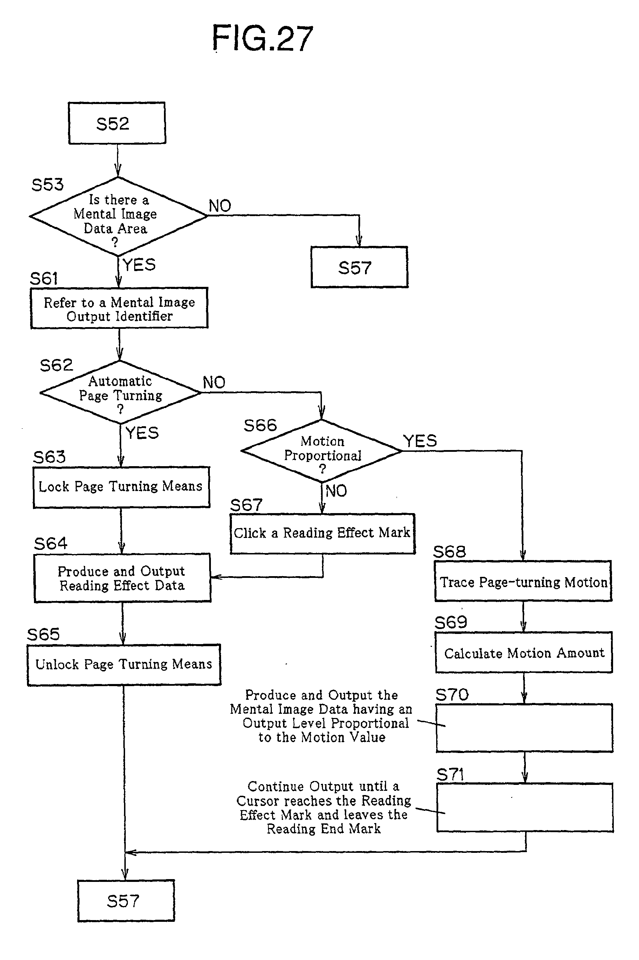

Fig. 27 is a flowchart depicting the procedure of outputting mental image data in proportion to the page turning motion. Steps S52, S53 and S57 are the same as those described with reference to Fig. 21. Step S61 is a processing module for referring to the data fields of the mental image output identifier. Step S62 determines which of alternative processing paths to be followed depending to the obtained data being automatic or not. With the data value "automatic control", the reading effect control means locks the page turning function (Step S63). Then, the reading effect control means performs Steps S54, S55 and S56 (in Step S64). On completion of outputting the reading effect data, the reading effect control means releases the page turning function from the locked state (Step S65) and advances the procedure to Step S57.

With the obtained data value "not automatic control" in Step S62, the reading effect control means refers to detailed data of the mental image data identifier in the table and determines whether the value is the type that will be output in proportion to the page turning motion (Step S66) and decides which of alternative paths to be followed. If the value was not motion proportional, the reading effect control means waits until the user clicks a reading effect mark (Step S67). When the reading effect mark was clicked, the reading effect control means performs the processing of Step S64.

With the obtained value being the motion proportional type is Step S66, the reading effect control means starts tracing the page turning motion (traveling cursor) (Step S68). In Step S69, the motion is calculated as follows.

Different from the psychological state level Kt of Fig. 21, this embodiment uses psychological state levels Km to be defined according to the following equation.$\text{Km = βU}$ where β is a proportional constant and u is a motion value. When a cursor is assumed to move linearly from a starting point of a screen image (Fig. 23) to a starting point of an area to which a mental image data is related, a value U can be approximated a value proportional to a distance r between the above two points. Consequently, the psychological state level km can be expressed as$\text{Km = γr}$ (γ is a proportional constant) and the output level of the mental image outputting means, which is proportional to the motion, can be determined by using the related graphs of Fig. 26.

The above output is continued until the cursor arrives at a reading effect mark (Step S70). After that, the output level is kept at the same as the cursor arrives during cursor exist on the reading effect mark until the cursor is off the mark (Step S71). In the above case, the output of the mental image output means can be increased in accord with the motion of user's hand or fingers, giving an increased impressive effect.

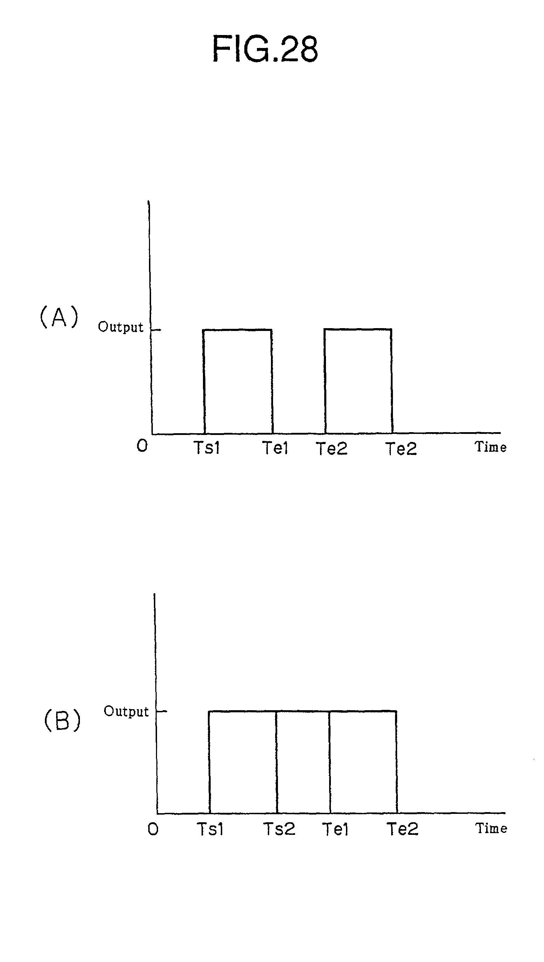

Figures 28(A) and 28(B) show timing charts each for outputting reading effect data on a display screen image with two reading effect marks put at different places thereof. Fig. 28(A) depicts the case where respective reading effect data outputs have no overlaps in time. Fig. 28(B) depicts the case where respective reading effect data outputs have overlaps in time. In Figs. 28(A) and 28(B), Ts1 and Ts2 are the times determined by the time switching mode and a duration value (Te1-Ts1) or (TeS-Ts2) is determined by the times set by the display mode. If the outputs have the overlap (Ts2-Te1) as shown in Fig. 28(B), respective output levels are overlapped, averaged and output.

It is possible to adjust the output level to any of values from zero to the infinity when producing each reading effect data or reading psychological data information.

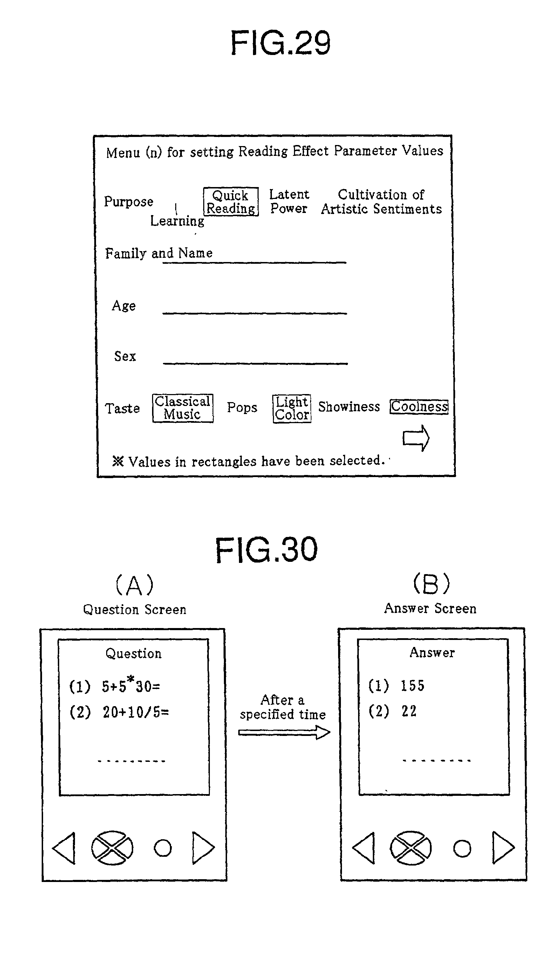

Fig. 29 shows an example of a menu screen for setting parameters. The menu is called up on the screen by using a newly provided button or by simultaneously pressing two or more cursor direction keys. Selection of each item in the menu is made by using the cursor. Application examples of the present invention will be described below for each application purpose. The purpose item shown on the top line in the menu may have a special independent button provided on the electronic book displaying device.

### (Embodiment 2-1)

This aspect of the present invention relates to application of the electronic book displaying device as a quick reading device. To realize the quick reading, several areas for easily transmitting the content of the displayed book data in a short time or areas for simply indicating a summary of the displayed content are extracted from the book and stored as respective areas. For each of the extracted areas, the waiting time is adjusted in the time switching mode in view of its display order and the display time length allowing the user to understand the scene is preset in the display mode. The areas prepared for quick reading are subsequently displayed on the display screen in the respectively preset waiting times and sequence for the respectively preset time, thus realizing the quick reading aiding function. Quick-reading devices of different quick reading levels can be realized by combining the display waiting time, display time and the areas to be displayed for quick reading. Quick-reading devices of different quick-reading levels can be realized by combining the display waiting time, display time and different viewpoint scene data.

### (Embodiment 2-2)

This aspect relates to application of the electronic book displaying device as a learning and/or quiz play device. For example, a page of questions (tests) or quizzes is displayed as book data. The time for which the user has to answer to each question is set as the waiting time in the time switching mode. The correct answer to that question is displayed as a different viewpoint scene data. This is shown in Fig. 30. The tension of suspense can be provided by switching the screen image to another by the limit of time.

### (Embodiment 2-3)

This aspect relates to application of the electronic book displaying device as a simple animation player. An area to which different viewpoint scene data is added is of the same size as a page size of the book data and a reading effect mark is applied to a whole screen. The different viewpoint scene data included in a page of the book data is one screen. The display time 172 of different viewpoint scene data is set to the time enabling the user to read the displayed data content in the display mode 109. After the display time preset in the display mode 109, a code value 0x01 is selected in the after time processing field 173 and applied to the next page of the book data. The same different viewpoint scene data is set to all pages, whereby pages are automatically turned to create a simple animation based on the principle of an animated cartoon. The automatic page turning device can be also realized by the same method.

### (Embodiment 2-4)

This aspect of the present invention relates to application of the electronic book displaying device as a device for improving the latent power of the user and/or psychological treatment. Prior to the description of the method to realize the device, a subliminal image is briefly described below. A TV scene that we usually see is a sequence of 30 (picture) frames per 1 second. If a picture frame having a period shorter than the above time is mixed in the normal picture frames, it is invisible to viewer's eyes. However, it is known that the frequently insertion of such invisible image can produce a psychological effect to the viewers. Inserted for the shorter period is called a subliminal image. In this application, different viewpoint scene data has the longer waiting time in the time switching mode and the display time of less than 30 milliseconds. After the display time elapsed, the different viewpoint scene data is replaced by the preceding normal scene. When the different viewpoint scene data being a message, e.g., "Your capacity is developing" or "You will success in examination for the objective university" or "Your soul is saved" is displayed frequently under the above display conditions, it may have the subliminal effect.

### (Embodiment 2-5)

This aspect of the present invention relates to application of the electronic book displaying device as a device for cultivation of aesthetic sentiments and/or relaxation purpose. This can be realized by preparing different viewpoint scene data or metal image data whose content is suitable for the above purpose. The display time of the data is set to relatively long time, e.g., 5 minutes or more to increase the effect of the presentation.

### (Embodiment 2-6)

This aspect of the present invention relates to application of the electronic book displaying device as a device capable of presenting a new book. This can be realized by making an increment of the scene number of the different viewpoint scene data as the number of reading times increases. using the reading history information.

### (Embodiment 2-7)

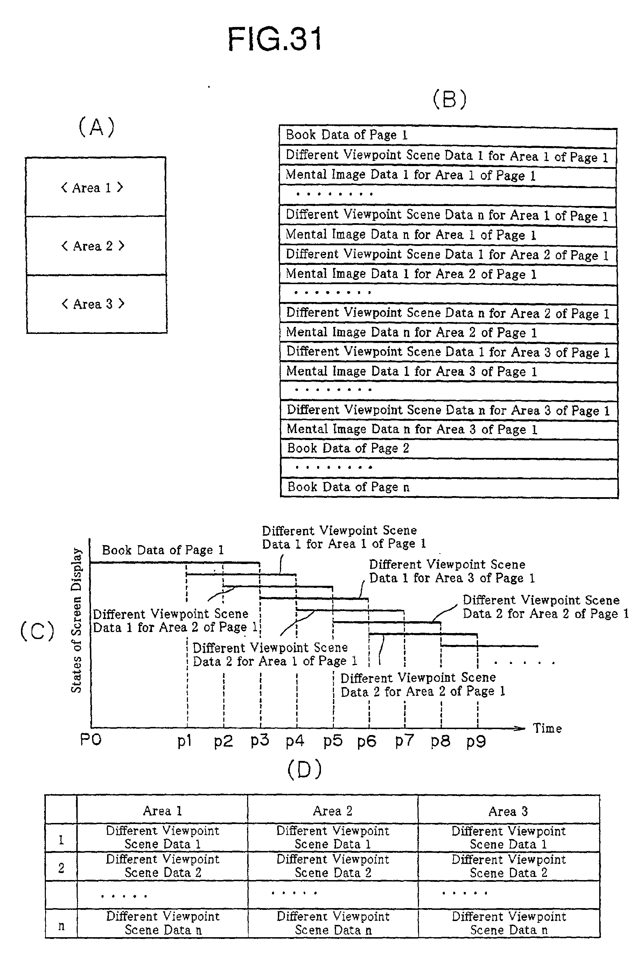

This aspect of the present invention relates to application of the electronic book displaying device as an automatic comic reading device or a presentation display device. This is another embodiment relative to the embodiment (2-3). This embodiment can be also applied for books having pages each divided into plural areas to be read in the predetermined order. Referring to Figs. 31(A), 31(B), 31(C) and 31(D), the application is described below.

Fig. 31(A) shows a particular image divided into three areas 1 (scene 1), 2 (scene 2) and 3 (scene 3) to be read in the described order. The next page has areas 1 (scene 4), 2 (scene 5) and 3 (scene 6).

Fig. 31(B) shows an exemplary structure of book data, wherein different viewpoint scene data or mental image data is prepared for n-scenes (n is the scene number) for respective areas of book data of page 1. Book data of the next page 2 and subsequent pages have only book data and a reading effect mark is applied to a whole of each area.

Fig. 31(C) shows a timing chart for display (scenes) to be displayed on the display means. Areas 1, 2, 3 of Page 1 are displayed for example at the time p0, and exchanged by different viewpoint scene data at the times p1, p2, p3 respectively. The different viewpoint scene are changed to alternative different viewpoint scene at the times p4, p5, p6 respectively.

Fig. 31(D) shows the content of a reading effect table in which the area numbers are stored in horizontal axis and the scene of image changes in each area in the vertical axis. In each cross cell, there is stored a scene number of different viewpoint scene data (the page number and the area number are the same that the page number and the area number of the book data unless otherwise specified).

The operation of the reading effect means will be described about how to image changes, omitting the processing of mental image data for the simplicity of the explanation.

First, the user operates the page turning means of the device to display a book data of page 1 on the display screen. The reading effect control means recognizes the presence of three reading effect marks on the screen image consisting of mental image data 1 for area 1 of page 1, mental image data 1 for area 2 of page 1 and mental image data 1 for area 3 of page 1. The reading effect control means reads reading environment information and recognizes that the purpose code value means "automatic reading comics".

The reading effect control means then refers to a reading effect table (Fig. 31(D)) for automatic reading comics. Since the scene changing is conducted first time and the reading effect mark is added to area 1, different image scene 1 is selected. Referring to the data format shown in Fig. 18, the reading effect control means makes preparation for changing the display scene to a different viewpoint scene data 1 (for area 1 of page 1) designated in the reading effect table after the time (p1-p0) determined in the time switching mode.

Referring to display mode information in the data format (Fig. 18), the reading effect control means continues the data display for the time (p4-p1) from the time p1 and does preparation for continuing the same display after the time (p4-p1). Next, the reading effect control means combines mental image data 1 obtained from the mental image data 1 of the page area 1 with the different viewpoint scene data 1 for area 1 of page 1. In this example, the mental image data processing is omitted and, therefore, the scene of book data area 1 of page 1 is changed to the different viewpoint scene data 1 for area 1 of page 1 at the timing specified in the time switching mode and the latter image is displayed for time preset in the display mode (the display is continued after the specified time elapses. A value of a buffer for managing the number of scene changes is increased by 1 (i.e., the initial set 1 is incremented to 2). The similar processing operations are made for the areas 1 and 2.

The processing for scene 4 in area 1 of the screen image is described below. It is now assumed that the reading effect mark obtained from mental image data 2 in area 1 of page 1 exists in the same area (i.e., a whole area of scene 1 of Fig. 31(A)) in which mental image data 1 of area 1 of page 1 was displayed, and the values obtained from the time switching mode and the display mode for different viewpoint scene data 1 for area 1 of page 1 are equal to the corresponding values of the book data. In this instance, the scene of area 1 is changed to the different viewpoint scene data 2 for area 1 of page 1 when the time (p4-p1) elapsed from the time p1 and displayed for the period (p7-p4). The automatic comic reading device having an output shown in Fig. 31(C) can be realized by repeating the similar processing for other areas.

In Fig. 31(B), mental image data n of area 3 of page 1 is followed by book data of page 2 and subsequent pages. This arrangement allows the user to read electronic comic story books avoiding continuous reading comics. Image data of the book data has the structure common to the different viewpoint scene data.

### (Embodiment 2-8)

This aspect of the present invention relates to application of the electronic book displaying device as a usual electronic book reading device that can be realized by omitting all input and output for the reading effect.

### (Embodiment 3)

The third embodiment of the present invention will be described first on a storage medium with recorded thereon data to be displayed. This embodiment deals with electronic book data (hereinafter referred to as book data) as data to be displayed. However, the present invention is not restricted to the electronic book data and can be applied to image data stored in image filing devices, document data prepared by word processing devices and other kinds of data that can be usually displayed on a display units.

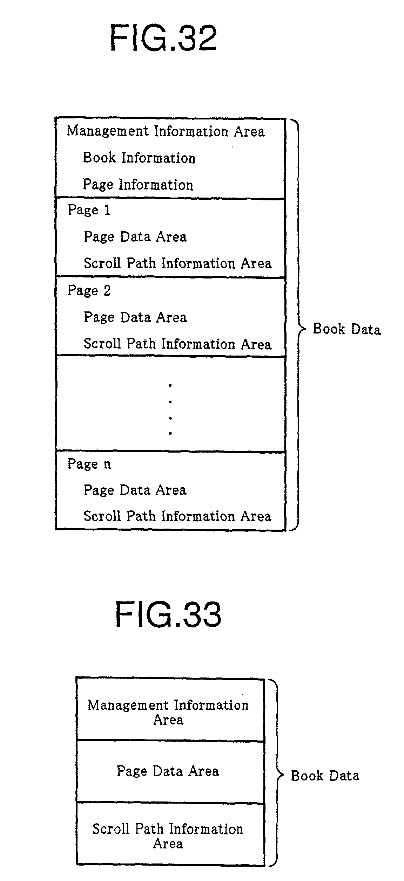

Fig. 32 shows a general structure of a storage medium on which book data has been recorded as display data according to the present invention. As shown in Fig. 32, the book data consists of a manage information area including book information (book title, writer's name, etc.) and page information (the total number of pages), a page data area including data of each page of the book and a scroll path information area including information necessary for scroll display and additional information. The data is recorded in form of a file on the storage medium. In Fig. 32, the page data area is divided into respective pages that are stored as separated units. Scroll path information area is also divided and distributed to respective pages. Alternatively, the page data area and scroll path information area may be stored together as shown in Fig. 33. In this case, information necessary for displaying each page data by scrolling is managed for each page.

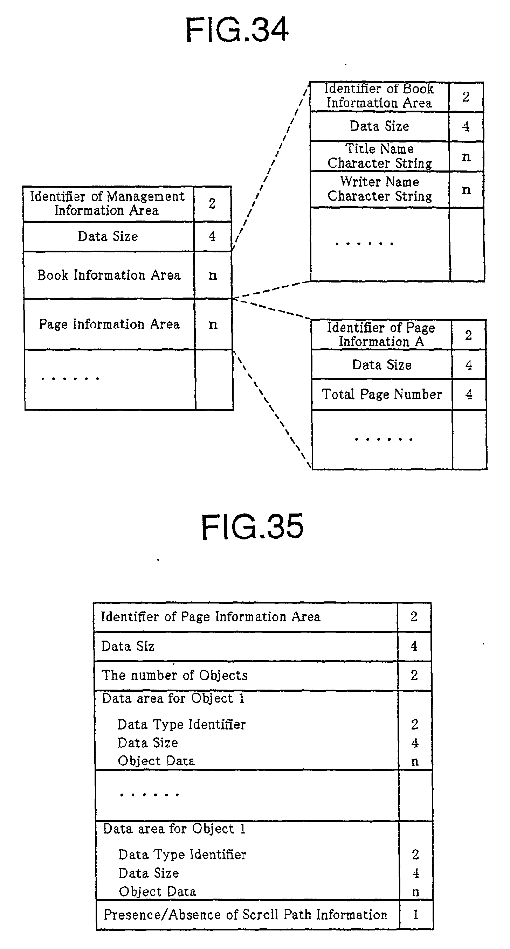

Fig. 34 shows an exemplary structure of the management information area of the book data. The management information area consists of an identifier indicating the management information area, data size of this area, book information area (book title, writer's name, etc.) and a page information area storing the total number of pages. Each numeral shown on the right side in a table of Fig. 34 represents the number of bytes.

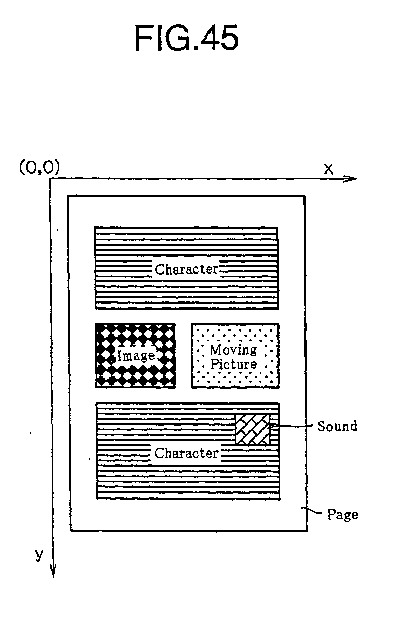

Fig. 35 shows an exemplary structure of each page data area. The page data area consists of an identifier of the page data area, data size of this area, object data area in which objects (i.e., data elements such as character data, image data, sound data, moving picture data) are described separately, the number of objects and information indicating the presence of scroll path information added thereto. As shown in Fig. 45, each page is provided with a virtual coordinate system having an original at a left top corner point of the page. Each page is constructed of respective objects arranged thereon according to the virtual coordinates. Sound data that cannot be displayed is virtually disposed for a whole page or in a related object area.

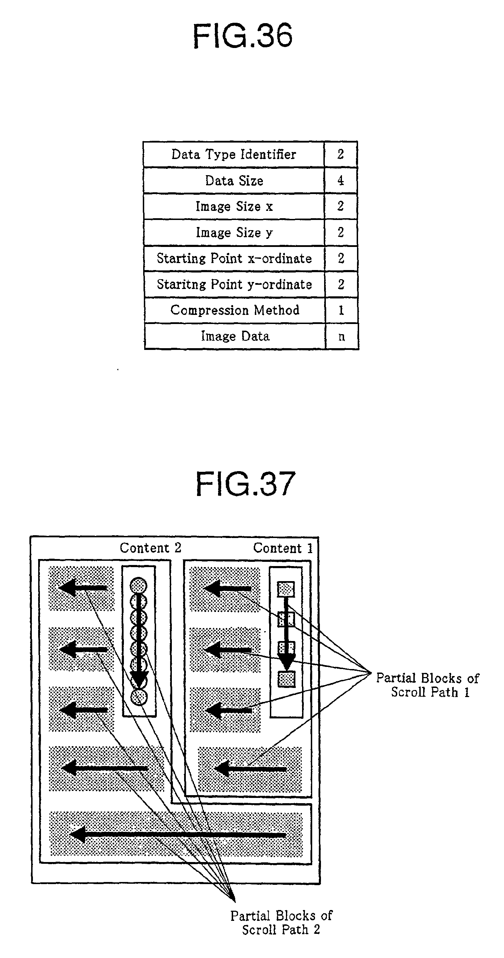

The object data areas may have different data structure depending on the kinds of data. Typically, each object area consists of an identifier of the data kind, data size and object data. For example, image data shown in Fig. 36 includes an identifier of the data kind indicating the image data, data size, image size in directions X and Y, a starting point of the coordinates on the display screen image and data compression method by which the data is compressed and stored.

Referring to Figs. 37 to 39, the scroll path information area shown in Fig. 32 is described below. In Fig. 37, there is a mimic illustration of scroll path information set on particular page data. The book data may contain a plurality of contents in a complex form as shown Fig. 37. If the book data on a particular page is larger than the display screen or it is displayed in an enlarged size, the continuation of paragraphs may be confused on the page image. Accordingly, a scrolling path is set for each of object data contents (contents 1 and 2 typically shown in Fig. 37) in a page data area. Each scrolling path consists of partial block paths represented by respective arrows in Fig. 37. For example, a newspaper page image contains plural articles each of which is provided with a scroll path that has branches (i.e., partial block paths) at places where a column changes to another or the text changes its direction.

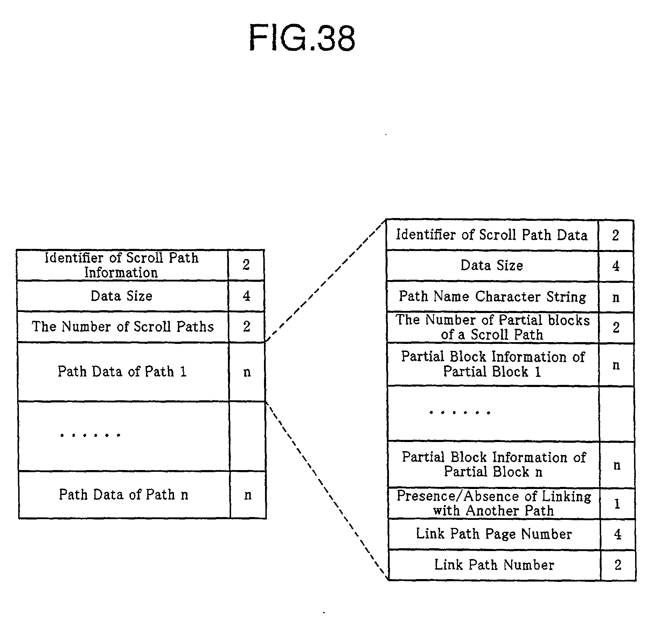

Fig. 38 shows a method for storing the scroll paths in the scroll path information area. As shown on the left side of Fig. 38, the scroll path information includes a scroll path information identifier, data size of the area, the number of scroll paths and scroll path data represented by a vector column for each path. As shown on the right side of Fig. 38, each path data includes a path data identifier, data size, a path name character string, the number of partial block paths to be scrolled, partial block information for each of the partial blocks (1-n) and link information for linking with other path. The link information is used for specifying the links with other path in the current page and other pages. The link information therefore includes information indicating the presence/absence of linked paths, the number of the page containing the linked path if such exists, the link path number indicating the number of that path in that page.

The path name character string includes a title of the text content of an area to which the scroll path is given. For example, when the page data content is an article of a newspaper and a scroll path is set for each article, a title of the article is recoded in the path name area.

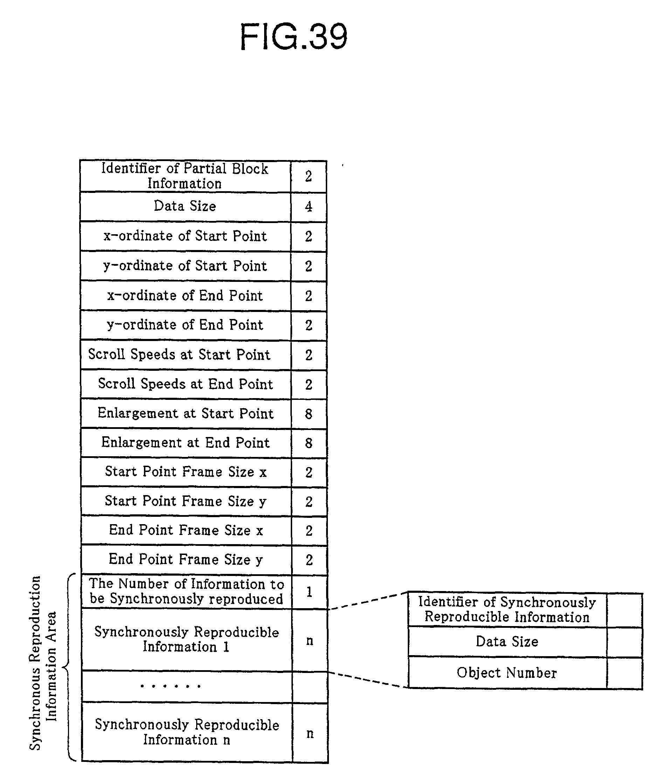

The partial block information is stored in the order of partial blocks to be scrolled. As shown in Fig. 39, information written for each partial block includes an identifier identifying the partial block, a data size, coordinates of a starting point and an end point for representing the partial block data by a vector, scroll speeds at the starting point and the end point, scales of enlargement or reduction at the starting point and the end point, a size of an area frame indicated at the starting point and the end point and synchronous reproduction information area storing information to be reproduced in synchronism with the beginning of scrolling the partial block. The scroll speed area includes a record of a traveling distance measured for each scroll according to the coordinate system set for the page.

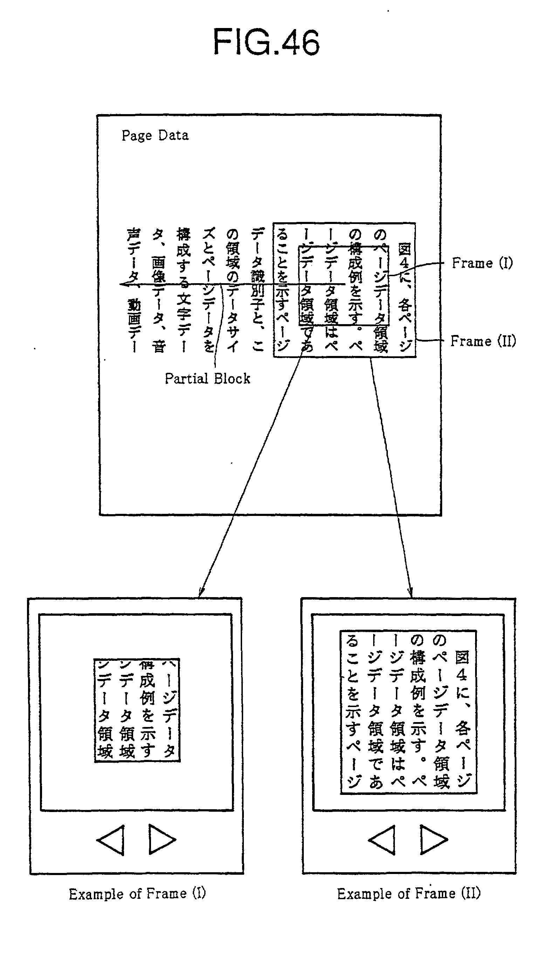

The size on the coordinates set at the page is specified by the size of an area frame indicated at the starting point and the end point. This frame size parameter is provided for the following reason. When scrolling according to a scroll path set on a page, a neighboring area along the scroll path is read from the page data, enlarged by the specified magnification factor and displayed on the displaying device. In this instance, a content necessary to be displayed may not be displayed when it is not included in the specified neighboring area. When the neighboring area is specified by the size of a frame (I) as shown in Fig. 46, the text lacing in the top and bottom characters is displayed and cannot be understood. Accordingly, it is essential to select a suitable size of a frame (e.g. a frame (II) in the shown case) in which the necessary content can be included.

The synchronous reproduction information area stores the number of information and the specified number of information units to be synchronously reproduced. The information includes an identifier indicating the synchronous reproduction information, a data size and an object number as shown in Fig. 39. The object number corresponds to the number of the object data stored in the form shown in Fig. 35. For example, the reproduction of sound effects in accord with the display content of the partial block can be realized by registering the sound effect data in the page data and holding the object number in the synchronous reproduction information area.

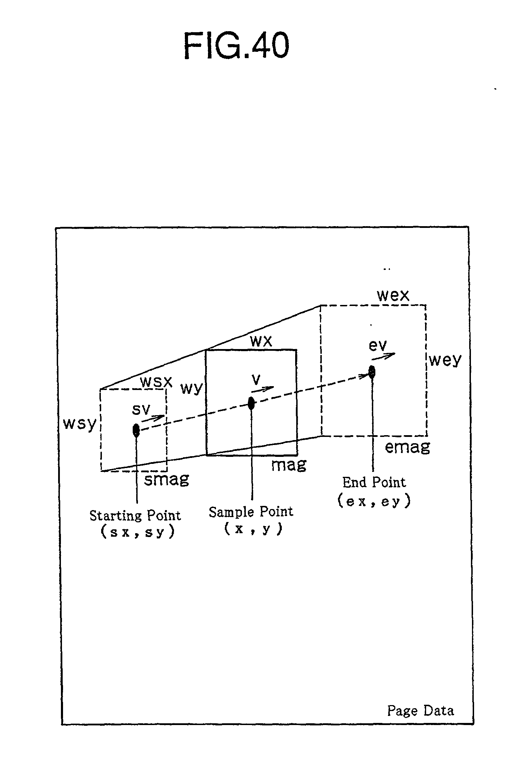

When the display is made by using the partial block information, a rectangular area having a size (wsx, wsy) of a frame at a starting point located from the coordinates (sx, sy) of a starting point on the page data is enlarged by a enlargement ratio smag and displayed on the display means as shown in Fig. 40. The image being displayed on the screen is scrolled at a specified scroll speed sv. In this case, if the synchronous reproduction information is stored in the above area, its object specified therein is reproduced in synchronism with the scroll operation. The scroll display of the image is done from the starting point to the end point according to a center axis of the displayed rectangle, smoothly changing three values (scroll speed, magnification and frame size) to get values specified at the end point. Since the scroll speed, the frame size and the magnification factor in addition to the scroll path can be preset, the scroll display is not only carried out in accord with the content of the display image but has a variety of scrolling, e.g., gradually enlarging the image. An increased effect may be obtained by embedding effective display data in the book data. Furthermore, it is also possible to preset suitable voice or sound data to be output during the scroll display or to set moving picture data to be reproduced in synchronism with the beginning of the scroll display. When the scroll path information is stored in the form shown in Fig. 33, it may be unclear which of pages partial block information for each path concerns. This problem can be solved by storing the number of page containing the partial block in a page number area newly provided in the partial block information of Fig. 39.

A displaying device according to an aspect of the present invention will be described below by way of example to read the display data of the electronic book stored on the above described storage medium and display the data. However, the displaying device is not restricted to the electronic book data and can also read and display the above described display data with scroll path information added thereto.

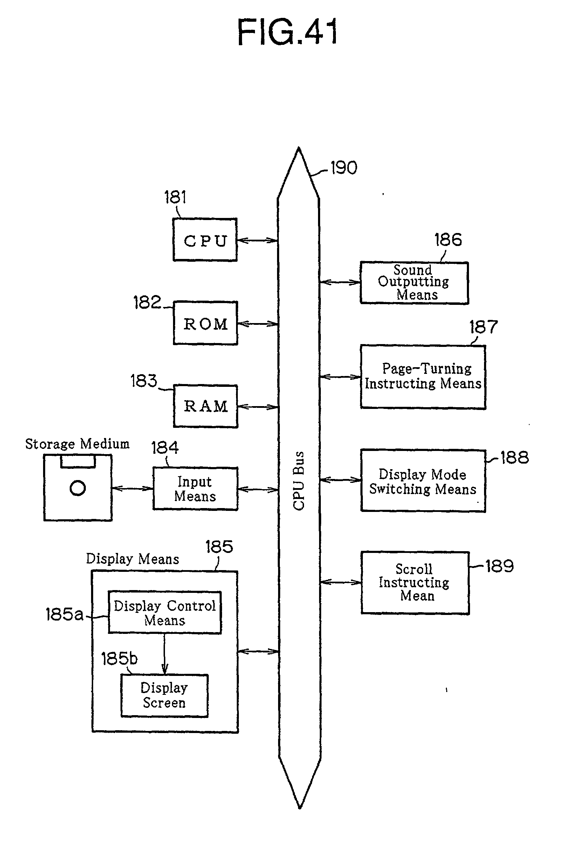

Fig. 41 is a block diagram of a displaying device according to the present invention. This displaying device comprises a control means (CPU) 181, a ROM 182 with control software stored therein, a RAM 183 for storing a program, an operation area and book data (e.g., page data, book information, etc.), an input means 184 (e.g., a disc drive or a communication line) for reading the book data stored on a storage medium and a display means 185 for displaying the book data. The displaying device also includes a sound output means 186 for outputting voice and sound data included in the book data, a page turning instructing means 187 consisting of a button for inputting a user's instruction to turn a page being displayed, a display mode switching means 188 consisting of a button used by the user for switching the display mode from a usual display mode to a scroll display mode and vice versa, a scroll instructing means 189 consisting of buttons for inputting a user's instruction to scroll the display image and a CPU bus 190 for connecting all components of the displaying device. The CPU 181 receives the user's instructions input through the page turning instructing means 187, display mode switching means 188 and the scroll instructing means 189 and performs various processing operations according to the control program stored in the ROM 182. The display means 185 comprises a display control means 185a for control the display data content and a display screen 185b.

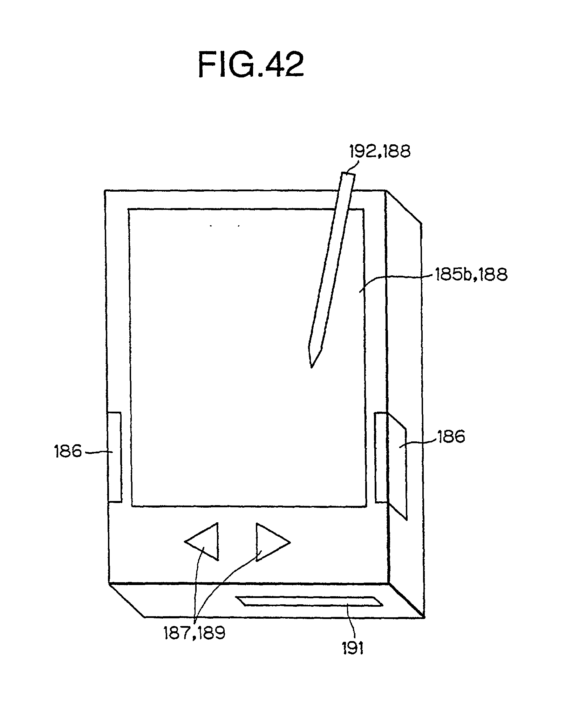

Fig. 42 is a typical external view of the displaying device according to the present invention. As shown in Fig. 42, a display screen 185b has a transparent touch sensitive film resistance tablet applied to its surface, which tablet serves as the display mode switching means 188. Speakers are the sound outputting means 186 for outputting voice and sound data contained in the book data. Paired buttons provided on the displaying device are used common as the page turning instructing means 187 for instructing the display device to turn pages and the scroll instructing means 189. The selection of either of the buttons determines the direction of turning a page or scrolling a display image. Numeral 191 designates a slot for insertion of the storage medium on which the book data has been recorded. Numeral 192 denotes a touch pen for changing the display mode through the tablet (display mode switching means 188) and inputting various kinds of inputs through the tablet.

A method for processing for displaying book data on the displaying device is as follows:

The above displaying device has two display modes for reproducing page data: one is a normal display mode in which a page is displayed and subsequently updated every time when instruction for turning a page is input through the page turning instructing means 187, and the other one is a scroll display mode in which page data is displayed and scrolled changing the scale of enlargement of a part of the page data according to the scroll path information added to the book data (automatically) or a user's instruction. When the user turned on the power supply of the displaying device, the device is driven in the normal display mode. The normal display mode is changed to the scroll display mode by inputting a user's instruction to the display mode switching means 188.

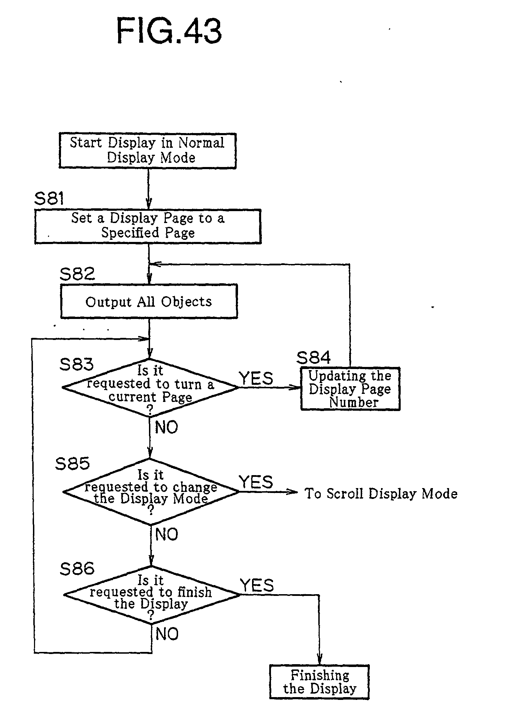

The operation of the displaying device in the two modes is as follows: Referring to a flowchart of Fig. 43, the operation of the displaying device first in the normal display mode will be described below. A page to be displayed is set to a specified page (Step S81). A page to be displayed after turning on the power is set to a top page or a page that was opened the last reading time. A page to be displayed after switching the scroll display mode to the normal display mode is set to a current page. Page data of the set page is read and all objects in the page are output (Step S82). On completion of outputting all objects composing the page being displayed, a check is made to determine whether an instruction for turning a page has been input through the page turning instructing means 187 (Step S83). With the instruction, the current page number is changed to the next page number (Step S84) and reproduction of the page to be displayed is performed (Step S82). With no instruction for turning a page, a check is made to determine whether the user requests to change the current display mode through the display mode switching means 188. With the user's instruction, the display mode is changed to the scroll display mode. If no request was input to change the display mode, a check is made to determine whether the user requests to finish the display of page data (Step S86). If so, the procedure is finished. If no request was made to finish the display data processing, the procedure returns to Step S83 and the above processing is repeated until the user inputs a request for any of Steps S83 to S86.

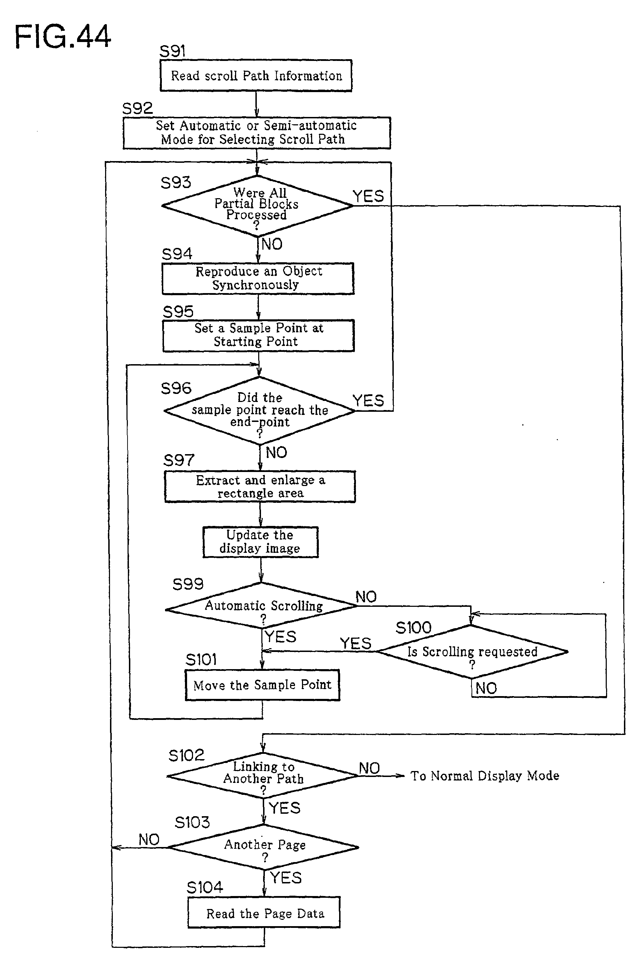

Referring to a flowchart of Fig. 44, the operation of the displaying device in the scroll display mode will be described below. When the display mode is switched from the normal display mode to the scroll mode, scroll path information added to a page being displayed is read (Step S91) and a list of scroll path names (character strings) included in the current page (Fig. 38) is displayed on the display screen. The user is requested to select a scroll path from the presented list (Step S92). At the same time, the user is also requested to select the automatic scroll mode for automatically scroll the display image or semi automatic scroll mode for scrolling the display image only when the scroll is requested by the scroll instructing means 189. In the automatic scroll mode, the displaying device conducts scroll display automatically, subsequently reading data of the scroll path information selected by the user once the user's instruction was given through the scroll instructing means 189. In the semi automatic scroll mode, the scroll display is conducted only for a period of inputting the instruction by using the scroll instructing means 189 (for example, for a period of pressing the button). Since the selected scroll path includes plural partial blocks, a procedure (Steps S94 to S101 to be described later) is done for each block of the path and then the procedure is transferred from Step S93 to Step S102. In Step S102, it is examined whether linking with another path is set or not. If no link is set, the display mode is changed to the normal display mode. If linking with another path is set, the page number of the path linked with the current path is examined (Step S103) and, if the page is different from the current page being displayed, page data of that page is read (Step S104). Then, the process returns to Step S93 for beginning the scroll display according to the linked scroll path information.

The processing for each of partial blocks of the scroll path (Steps S94 to S101) is as follows: As shown in Fig. 40, a sample point is set on a line segment from a starting point to an end point. Coordinates of the starting point and the end point are included in the partial block information. The processing for scroll display is made by determining a rectangular area to be displayed on the display screen and by moving the sample point on the line segment. In Step S94, when the partial block includes synchronous reproduction information, an object included in the information is reproduced. In the shown example, the processing advances to Step S95 after the reproduction of the object in Step S94. However, the reproduction processing of the voice and sound data and the image data cannot be immediately finished. It may be conducted little by little during the loop processing (Steps S96 to S101) or parallel with the above loop processing. After setting the coordinates (x, y) of the sample point to the starting point (sx, sy) of apartial block (Step S95), it is discriminated whether the sample point reaches to the end point (ex, ey) (Step S96). If so, the processing returns to Step S93 to process the next partial block. If the sample point did not reach the end point, the processing goes to Step S97 to calculate a rectangular area to be displayed on the display screen and the scale of its enlargement and prepare an image to be displayed. In this instance, the rectangular area size and the enlargement ratio are determined as follows: Assuming that a ratio of the distance between the current position of the sample point and the starting point to the distance between the current position of the sample point and the end point is s:(1-s) (0≦s≦1), a size (wx, wy) of the rectangular area to be displayed on the display screen and its enlargement ratio mag are determined according to the following equations 1:$\text{Wx = (1-s)×wsx+s×wex}$$\text{Wy = (1-s)×wsy+s×wey}$$\text{mag = (1-s)×smag+s×emag}$ where wsx, wsy is a size of the rectangle at the starting point, wex, wey is a size of the rectangle at the end point and smag and emag are enlargement ratios at the starting point and the end point respectively. A rectangular area (x-wx/2, y-wy/2) - (x+wx/2, y+wy/2) of wx, wy in size with a center placed at the current sample point is extracted as image data from the page data and enlarged by the enlargement ratio (mag). If the enlarged image exceeds a pixel size of the display screen, the enlargement ratio is reduced not to enlarge the rectangle over the pixel size of the display screen. The thus produced image is displayed on the display screen (Step S98). It is examined whether the current mode is the automatic scroll mode (Step S99). If the current mode is the semi automatic scroll mode, the process waits until the instruction to initiate the scroll display is given through the scroll instructing means 189. When the current mode is the automatic scroll mode or the scroll instruction was given by the user, the sample point is moved (Step S101). The displacement of the sample point is determined as follows:

First, a scrolling speed v at the sample point is determined from a scrolling speed sv at the starting point and a scrolling speed ev at the end point as follows:$\text{v = (1-s)×sv+s×ev}$

The displacement of the sample point is then determined according to the following equations 2:$\text{Δx = ν ×} \frac{\text{ex - sx}}{\sqrt{{\text{(ex - sx)}}^{\text{2}} {\text{+ (ey - sy)}}^{\text{2}}}}$$\text{Δy = ν ×} \frac{\text{ey - sy}}{\sqrt{{\text{(ex - sx)}}^{\text{2}} {\text{+ (ey - sy)}}^{\text{2}}}}$ The next sample point is set to (x+Δx, y+Δy). The processing returns to Step S96 and then Steps S97 to S101 are repeated until the sample point reaches the end point. In case if the backward scroll in the semi automatic mode is allowed, coordinates (x-Δx, y-Δy) are determined as the next sample point (Step S101) and then the scroll processing is conducted. In case if the scroll path information is stored in the form shown in Fig. 33, all scroll path information is read (Step S91) and, then, the path information given to the current page being displayed is extracted from there and presented to a user who selects the path to be scrolled (Step S92). The processing steps in Steps S93 and thereafter are the same as described before.

Automatic scroll mode relieves the user from doing troublesome settings for complex pages. Furthermore, the scroll display can be performed by changing scrolling speed, enlargement ratio and displaying area and by reproducing sound and image data in synchronism with the scrolling display. This increases the effects of display image. The scroll display can also be conducted only for time while the user instructs the scroll operation. This mode enables the user to scroll the image in accord with his or her reading speed. The scroll instructing means is composed of paired buttons to be easily operated by pressing.

### THE INDUSTRIAL APPLICABILITY OF THE INVENTION

The embodiment 1 of the present invention offers an advantageous effect for realizing easy reading document data (display data in the above description) distinguished visually by setting a visual confirmation guide base on a difference of its visibility from the other areas on the display screen. This cannot be realized by the prior arts.

A visual confirmation guide (remark area) on a document image can be moved in accord with its content by using content related parameters such as the complexity and frequency of occurrence of document data.

A variety of distinguishing the document data visually can be realized by setting parameters or using user's interface in addition to reverse video, which may be selectively applied in accord with the environmental conditions for the device or the user's preference.

The remark document can be moved by a unit distance: one character, several characters, line, sentence, paragraph or section, any one of which can be selected in accord with the environmental operating conditions or user's preference.

Timing control of the remark display can be executed by inducing parameters such as a remark interval, moving pattern, deformation pattern, etc.

A document data area to be distinguished visually can be dynamically changed in accord with the content or the user's preference by deforming the visual confirmation guide.

A moving speed of the remark document data can be set by adjusting the moving speed of the visual confirmation guide to match the user's reading speed.

The moving direction of the remark document data can be easily changed to the forward or reverse direction.

The same visual confirmation guide can be used for both dynamical distinguishing and statistical distinguishing of the document data. This facilitates construction of the device system.

The remark display can be easily executed by simply pressing a start/stop button.

The visual confirmation guide prevents the user from missing a line or repeatedly reading the same line when reading a page full with characters and lines or a page written in a complex style.

The visual confirmation guide is effective to keep the reader's eyes on a correct line on a page even with display screen vibration that may occur when reading the book, e.g., in a train.

A period of time for distinguishing each word or words visually can be adjusted according to the complexity or frequency of the word or words. Namely, a term difficult to read or understand can be distinguished visually for a longer time. This may help the user in understanding the document content.

The integration of the above advantageous effects ensures the user enjoying reading of the document data on the display screen with easier operation and increased pleasure.

The embodiment 2 of the present invention can output reading effect data that is multimedia information including different viewpoint scene data, voice and sound data and vibration data. This can create a vivid and real impression enabling the reader to further enjoying the reading of the book.

The embodiment is provided with the reading managing means for capturing a psychological state of the reader and can output increasing the reading effect suitable to the reader's psychological state..

It is possible to automatically select different viewpoint scene data and mental image data, which are best suited to the reader's purpose, personality, psychological state and reading history contained in the reading management information. This results in considerably lessening labor for preparing the reading effect data.

The reading environment information including reader's history enables the reader to read the same book with a new fresh feeling by varying the content of the book data in accord with the number of times of reading.

The reading speed can be controlled in accord with the user's reading environment information and/or the content of the book. For example, the embodiment can provide a quick-reading function and a slow reading function.

By selecting display switching time, reading display mode information and different viewpoint scene data, subliminal image data and voice and sound information, which are reproduced for very short time as compared with that of book data, can be mixed in the book data by selecting display switching time, reading display mode information and different viewpoint scene data. This function may increase the reading effect, develop the latent power of the user and improve the psychological treatment effect and educational effect of reading.

The book data of the same page can be changed depending upon the date and time by using the reading environment information. This may help the user in understanding the reading.

Output levels of vibration and voice and sound data, which are related to the book data, can be changed widely by using the display mode information. For example, the output is varied gradually to create fading in or fading out effect for emphasizing the reading effect.

The output level of mental image data can be changed depending upon the motion amount of the page turning operation, further increasing the environmental effect and reading effect.

The output levels of vibration data and voice and sound data, which data related to plural units of book data and coexist in the same page or the same window, can be controlled by an output level control function. For example, plural sound signals are fused into a single output signal having the increased effect.

The integration of the above functions of the embodiment 2 realizes an electronic book displaying device which has means for capturing and managing reading environment information including user's psychological state and reading state and, when displaying the book data to which the reading effect data, can easily output the multimedia reading effect data adapted to the user's reading environment information. The electronic book displaying device according to the embodiment 2 of the present invention can thus increase the reading effect and psychological and educational effects of reading.

According to the embodiment 3 of the present invention, it is possible to add necessary scroll display information to each specified scroll display unit and set a frame size of a display area for each of partial blocks of a scroll path, a scale of enlargement and a scrolling speed. This can solve the problems that scroll display may lack in necessary information in the neighborhood of the scroll path and small characters are hard to read. A variety of the scroll display can be realized by varying the frame size, enlargement and scrolling speed. The reproduction of voice and sound data and animation data can be started in synchronism with the beginning of the scroll display. Namely, impressive representation of scroll display can be realized.

## Claims

1. A data displaying device comprising a storage means with data stored therein, a display means for displaying the data and a display control means for controlling display of the data stored in the storage means on the data display means, characterized in that a remark display control means is also provided for displaying a visual confirmation guide for distinguishing a specified area of data being displayed on the display means visually.

2. A data displaying device as defined in claim 1, characterized in that the remark display control means displays the visual confirmation guide superposed on data being displayed on the display means.

3. A data displaying device as defined in claim 1 or 2, characterized in that the remark display control means distinguishes visibility of data being displayed with the visual confirmation guide superposed thereon by deforming the data or adding information thereto and displays the distinguished in visibility data with the superposed visual confirmation guide.

4. A data displaying device as defined in any one of claims 1 to 3, characterized in that the remark display control means moves and displays the visual confirmation guide being displayed.

5. A data displaying device as defined in any one of claims 1 to 3, characterized in that the remark display control means deforms and displays the visual confirmation guide being displayed.

6. A data displaying device as defined in claim 4 or 5, characterized in that the remark display control means simultaneously deforms, moves and display the visual confirmation guide being displayed.

7. A data displaying device as defined in any one of claims 1 to 6, characterized in that the remark display control means, prior to moving and displaying the visual confirmation guide, refers to a preset moving speed and moves and displayed the visual confirmation guide by using the preset moving speed.

8. A data displaying device as defined in any one of claims 1 to 7, characterized in that the remark display control means, prior to moving and displaying the visual confirmation guide, refers to a preset moving distance and deforms and displays the visual confirmation guide by using the preset moving distance.

9. A data displaying device as defined in any one of claims 1 to 8, characterized in that the remark display control means begins moving in a specified direction or deforming the displayed visual confirmation guide being still in stopped or not deformed state or stops moving in the specified direction or deforming the displayed visual confirmation guide being displaced or deformed.

10. A data displaying device as defined in any one of claims 1 to 9, characterized in that the remark display control means erases the visual confirmation guide being displayed.

11. A data displaying device as defined in any one of claims 1 to 10, characterized in that the remark display control means moves or deforms the visual confirmation guide at a speed based on complexity of data being displayed within the visual confirmation guide.

12. A data displaying device as defined in any one of claims 1 to 10, characterized in that the remark display control means moves or deforms the visual confirmation guide at a speed based on frequency of data being displayed within the visual confirmation guide.

13. A data displaying device as defined in any one of claims 1 to 12, characterized in that the remark display control means moves or deforms the visual confirmation guide at a speed based on a combination of the complexity with the frequency of data being displayed within the visual confirmation guide.

14. A data displaying method comprising a data storing step for storing data, a displaying step for displaying the data and a display control step for controlling display of data stored in a data storage means on a data display means, wherein a remark display control step is also provided for displaying a visual confirmation guide for distinguishing a specified area of data being displayed by the displaying step visually.

15. A data storage medium containing a record of data display program readable by a computer to realize a function for displaying visual confirmation guide using a difference in visibility, a function for distinguishing displayed data by the displayed visual confirmation guide visually and a function for moving or deforming the visual confirmation guide at a speed preset according to complexity or frequency of displayed data to make easier to read the remark displayed data.

16. An electronic book displaying device comprising a storage means with a record of book data, a display means for displaying the book data recorded on the storage means and a page turning means for turning pages of the book data displayed on the display means, characterized in that it is further provided with an environment managing means for managing information for user's reading environment, a second storage means for recording a different viewpoint scene data obtainable by viewing the displayed book data from different view point or mental image data distinguishing the different viewpoint scene data visually, a mental image outputting means and a reading effect control means for outputting reading effect data produced by using the different viewpoint scene data and the mental image data.

17. An electronic book displaying device as defined in claim 1, characterized in that the reading effect control means, prior to outputting reading effect data to display means or the mental image outputting means, controls outputting the reading effect data by referring to user's reading environmental information stored in the environment managing means.

18. An electronic book displaying device as defined in claim 16 or 17, characterized in that the reading effect control means outputs the reading effect data after a partial or whole book data area corresponding to a mental image data is displayed on the display means.

19. An electronic book displaying device as defined in any one of claims 16 to 18, characterized in that the reading effect control means outputs the reading effect data after the elapse of time specified by a time switching mode in book data.

20. An electronic book displaying device as defined in any one of claims 16 to 19, characterized in that the reading effect control means controls time or a method of outputting the reading effect data by using display mode values preset for respective book data areas into which the book data is divided according to a content or format.

21. An electronic book displaying device as defined in any one of claims 16 to 20, characterized in that the reading effect control means outputs reading effect data by using a reading effect table or a relation graph defining correlation between the reading effect data and reading environment information consisting of user information and psychological information or reading information.

22. An electronic book displaying device as defined in any one of claims 16 to 21, characterized in that the reading effect control means changes a level of outputting mental image data in a range from a zero to a maximal value in proportion with a psychological value being integrated environmental information of a reader's psychological state.

23. An electronic book displaying device as defined in any one of claims 16 to 22, characterized in that the reading effect control means outputs mental image data in proportion with an amount of page turning motion.

24. An electronic book displaying device as defined in any one of claims 16 to 23, characterized in that the reading effect control means outputs mental image data with corresponding reading effect data superposed thereon when a page contains plural book data areas corresponding to mental image data.

25. An electronic book displaying device as defined in any one of claims 16 to 24, characterized in that the reading effect control means stops outputting a part or whole of reading effect data.

26. An electronic book displaying device as defined in any one of claims 16 to 25, characterized in that a control method of the reading effect control means can be changed by a user.

27. A data storage medium containing a record of book data display program readable by a computer to realize a book data storing function, a display function for displaying stored book data, a page turning function for turning a book data page being displayed on the display means, a environment information managing function for managing information about reader's reading environment, a second storing function for storing a different viewpoint scene data obtainable by viewing the displayed book data from different viewpoint or mental image data, a mental image outputting means and a reading effect control means for outputting reading effect data produced by synthesizing the different viewpoint scene data with the mental image data.

28. A data storage medium with display data recorded thereon, wherein the display data is recorded by every specified unit and provided each with information for scroll display on a display screen.

29. A data storage medium with display data recoded thereon as defined in claim 28, characterized in that the specified unit of recorded display data is a page.

30. A data storage medium with display data recorded thereon as defined in claim 28, characterized in that the information for scroll display includes information scrolling display data in different directions.

31. A data storage medium with display data recorded thereon as defined in claim 28, characterized in that the information for scroll display includes information for linking with information for another scroll display.

32. A data storage medium with display data recorded thereon as defined in claim 28, characterized in that the information for scroll display includes information on a scroll display speed.

33. A data storage medium with display data recorded thereon as defined in claim 28, characterized in that the information for scroll display includes information for specifying a scroll display area.

34. A data storage medium with display data recorded thereon as defined in claim 28, characterized in that the information for scroll display includes information for specifying a scale of enlargement or reduction of a display area for scroll display.

35. A data storage medium with display data recorded thereon as defined in claim 28, characterized in that the information for scroll display includes synchronous reproduction information for specifying a display data content to be reproduced in synchronism with scroll display.

36. A displaying device for reproducing and displaying the storage medium with display data recorded thereon as defined any one of claims 28 to 35, which performs scroll display based on the information for scroll display.

37. A displaying device as defined in claim 36, characterized in that it is provided with a scroll indicating means for scroll display.
